(19) **Europäisches Patentamt**
**European Patent Office**
**Office européen des brevets**

(11) **EP 4 598 253 A1**

(12) **EUROPEAN PATENT APPLICATION**
published in accordance with Art. 153(4) EPC

(43) Date of publication:
**06.08.2025 Bulletin 2025/32**

(21) Application number: **23870129.6**

(22) Date of filing: **30.08.2023**

(51) International Patent Classification (IPC):
**H04W 76/14** (2018.01)     **H04L 67/52** (2022.01)
**H04W 4/02** (2018.01)

(52) Cooperative Patent Classification (CPC):
**H04L 27/26; H04L 67/52; H04W 4/02; H04W 4/70;**
**H04W 64/00; H04W 76/14**

(86) International application number:
**PCT/CN2023/115862**

(87) International publication number:
**WO 2024/066889 (04.04.2024 Gazette 2024/14)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **30.09.2022 CN 202211218277**

(71) Applicant: **Datang Mobile Communications**
**Equipment Co., Ltd.**
**Beijing 100085 (CN)**

(72) Inventors:
• **REN, Bin**
 **Beijing 100085 (CN)**
• **DA, Ren**
 **Beijing 100085 (CN)**
• **REN, Xiaotao**
 **Beijing 100085 (CN)**

(74) Representative: **Studio Torta S.p.A.**
**Via Viotti, 9**
**10121 Torino (IT)**

(54) **POSITIONING METHOD AND APPARATUS**

(57) The present application discloses a positioning method and apparatus, which are used to achieve positioning of any one of two ends of an established sidelink relative to the other end, thereby realizing a fast positioning solution for sidelink scenarios. The positioning method according to the present application includes: transmitting a first positioning reference signal to a peer end for which a sidelink with a local end has been established, and determining a first positioning measurement quantity by performing positioning measurement on a second positioning reference signal transmitted by the peer end; and obtaining a second positioning measurement quantity transmitted by the peer end, where the second positioning measurement quantity is obtained by the peer end by performing positioning measurement on the first positioning reference signal; and determining positioning information by using the first positioning measurement quantity and the second positioning measurement quantity.

Transmitting a first positioning reference signal to a peer end for which a sidelink with a local end has been established, and determining a first positioning measurement quantity by performing positioning measurement on a second positioning reference signal transmitted by the peer end; and obtaining a second positioning measurement quantity transmitted by the peer end, where the second positioning measurement quantity is obtained by the peer end by performing positioning measurement on the first positioning reference signal    ~ S501

Determining positioning information of the local end in relation to the peer end by using the first positioning measurement quantity and the second positioning measurement quantity    ~ S502

FIG. 5

## EP 4 598 253 A1

**Description**

**CROSS-REFERENCE TO RELATED APPLICATION**

This application claims priority to Chinese Patent Application No. 202211218277.2, filed with China National Intellectual Property Administration on September 30, 2022 and entitled "POSITIONING METHOD AND APPARATUS", which is hereby incorporated by reference in its entirety.

**TECHNICAL FIELD**

The present application relates to the field of communication technologies, and in particular to a positioning method and apparatus.

**BACKGROUND**

In New Radio (New Radio, NR) technologies under Release 16 (Release 16) by the 3rd Generation Partnership Project (3rd Generation Partnership Project, 3GPP), definitions have been provided for the following content about a downlink positioning reference signal (Positioning Reference Signal, PRS) resource, an uplink uplink sounding reference signal for positioning (Sounding Reference Signal for Positioning, SRS-Pos) signal, resource configuration information, related measurement quantities, and such. However, there is no positioning solution currently for Sidelink (Sidelink, SL for short) scenarios.

**SUMMARY**

Embodiments of the present application provide a positioning method and apparatus, which are used to achieve positioning of any one of two ends of an established sidelink relative to the other end, thereby achieving a fast positioning solution for sidelink scenarios.

At one end of a sidelink, a positioning method according to an embodiment of the present application includes:

transmitting a first positioning reference signal to a peer end for which a sidelink with a local end has been established, and determining a first positioning measurement quantity by performing positioning measurement on a second positioning reference signal transmitted by the peer end; and obtaining a second positioning measurement quantity transmitted by the peer end, where the second positioning measurement quantity is obtained by the peer end by performing positioning measurement on the first positioning reference signal; and

determining positioning information by using the first positioning measurement quantity and the second positioning measurement quantity.

According to the method in the embodiments of present application, by means of transmitting a first positioning reference signal to a peer end for which a sidelink with a local end has been established, and determining a first positioning measurement quantity by performing positioning measurement on a second positioning reference signal transmitted by the peer end; and obtaining a second positioning measurement quantity transmitted by the peer end, where the second positioning measurement quantity is obtained by the peer end by performing positioning measurement on the first positioning reference signal; and finally, determining positioning information by using the first positioning measurement quantity and the second positioning measurement quantity, positioning of any one of two ends of the established sidelink in relation to the other end is achieved, namely, a fast positioning solution for sidelink scenarios is achieved.

In some implementations, the first positioning reference signal is transmitted using one of the following two patterns:

a non-staggered positioning reference signal pattern, in which transmission of a positioning reference signal is repeated with an OFDM symbol as granularity; and

a staggered positioning reference signal pattern, in which transmission of a positioning reference signal is repeated with M OFDM symbols as granularity, where M represents a number of OFDM symbols occupied by a positioning reference signal resource in time domain, and M is a positive integer greater than or equal to 1 and less than 14.

In some implementations, the first positioning measurement quantity includes one or a combination of the following two types of positioning measurement quantities:

a first type of positioning measurement quantity, where the first type of positioning measurement quantity includes one or a combination of the following measurement quantities:

2

phase of arrival POA values $\varphi_a^i(T_{21})$ and $\varphi_a^i(T_{22})$ at $T_{21}$ and $T_{22}$ time instants, and the corresponding measurement time instants $T_{21}$ and $T_{22}$; where the $T_{21}$ and $T_{22}$ time instants are time instants when the peer end transmits two consecutive repeated positioning reference signals; and

a POA variation from the $T_{21}$ time instant to the $T_{22}$ time instant: $d_{Phi2} = \varphi_a^i(T_{22}) - \varphi_a^i(T_{21})$ , and a time interval dT2 from the $T_{21}$ time instant to the $T_{22}$ time instant;
a second type of positioning measurement quantity, where the second type of positioning measurement quantity includes one or a combination of the following measurement quantities:

a relative speed or a Doppler frequency offset of the peer end in relation to the local end;
a cumulative sum of oscillator frequency offsets of the peer end and the local end; and
a change rate of the cumulative sum of the oscillator frequency offsets of the peer end and the local end.

In some implementations, the second positioning measurement quantity includes one or a combination of the following two types of positioning measurement quantities:
a first type of positioning measurement quantity, where the first type of positioning measurement quantity includes one or a combination of the following measurement quantities:

phase of arrival POA values $\varphi_a^i(T_{11})$ and $\varphi_a^i(T_{12})$ at $T_{11}$ and $T_{12}$ time instants, and the corresponding measurement time instants $T_{11}$ and $T_{12}$; the $T_{11}$ and $T_{12}$ time instants are time instants when the local end transmits two consecutive repeated positioning reference signals; and

a POA variation from a $T_{11}$ time instant to a $T_{12}$ time instant: $d_{Phi1} = \varphi_a^i(T_{12}) - \varphi_a^i(T_{11})$ , and a time interval dT1 from the $T_{11}$ time instant to the $T_{12}$ time instant;
a second type of positioning measurement quantity, where the second type of positioning measurement quantity includes one or a combination of the following measurement quantities:

a relative speed or a Doppler frequency offset of the local end in relation to the peer end;
a cumulative sum of oscillator frequency offsets of the local end and the peer end; and
a change rate of the cumulative sum of the oscillator frequency offsets of the local end and the peer end.

In some implementations, the positioning information includes a Doppler frequency offset determined through the following manner:

using a first ratio of a phase of arrival variation from a $T_{11}$ time instant to a $T_{12}$ time instant to a repetition time interval $T_{12}$ - $T_{11}$ of a first positioning reference signal resource;
determining a second ratio of a phase of arrival variation from a $T_{21}$ time instant to a $T_{22}$ time instant to a repetition time interval $T_{22}$ - $T_{21}$ of a second positioning reference signal resource; and
determining the Doppler frequency offset to be half of a difference between the first ratio and the second ratio;
where the $T_{11}$ and $T_{12}$ time instants are time instants when the local end transmits two consecutive repeated positioning reference signals;
and where the $T_{21}$ and $T_{22}$ time instants are time instants when the peer end transmits two consecutive repeated positioning reference signals.

In some implementations, the positioning information includes an oscillator frequency offset determined through the following manner:

using a first ratio of a phase of arrival variation from a $T_{11}$ time instant to a $T_{12}$ time instant to a repetition time interval $T_{12}$ - $T_{11}$ of a first positioning reference signal resource;
determining a second ratio of a phase of arrival variation from a $T_{21}$ time instant to a $T_{22}$ time instant to a repetition time interval $T_{22}$ - $T_{21}$ of a second positioning reference signal resource; and
determining the oscillator frequency offset to be half of a sum of the first ratio and the second ratio;
where the $T_{11}$ and $T_{12}$ time instants are time instants when the local end transmits two consecutive repeated positioning reference signals;
and where the $T_{21}$ and $T_{22}$ time instants are time instants when the peer end transmits two consecutive repeated positioning reference signals.

In some implementations, the positioning information further includes a change rate of the oscillator frequency offset.

In some implementations, the positioning information further includes a relative distance variation determined through the following manner:

determining a product of the Doppler frequency offset, a preset carrier wavelength, and first measurement time to be a relative distance variation of the local end in relation to the peer end; and/or,

determining a product of the Doppler frequency offset, the preset carrier wavelength, and second measurement time to be a relative distance variation of the peer end in relation to the local end;

where the first measurement time is preset positioning measurement time of the local end; and

where the second measurement time is preset positioning measurement time of the peer end.

In some implementations, the method further includes:

transmitting the positioning information to the peer end and/or a positioning management function entity.

In some implementations, the method further includes:

transmitting whether the local end has a positioning capability for determining the positioning information.

In some implementations, the method further includes:

obtaining positioning assistance data, where the positioning assistance data includes resource configuration information of the first positioning reference signal.

In some implementations, the resource configuration information of the first positioning reference signal includes:

an OFDM symbol for transmitting a positioning reference signal at a $T_{11}$ time instant being adjacent to an OFDM symbol for transmitting a positioning reference signal at a $T_{12}$ time instant; or, an OFDM symbol for transmitting a positioning reference signal at a $T_{11}$ time instant and an OFDM symbol for transmitting a positioning reference signal at a $T_{12}$ time instant being two different positioning reference signal resources configured on adjacent OFDM symbols; where the $T_{11}$ time instant and the $T_{12}$ time instant are two adjacent time instants for transmitting positioning reference signals;

and/or,

during positioning measurement time, the local end being disabled of performing timing and/or frequency adjustment; or, the local end, in case of timing and/or frequency adjustment, needing to transmit, to a network side and/or the peer end, a timing and/or frequency adjustment value or indication information on whether the current timing and/or frequency adjustment is valid.

At the other end of the sidelink, a positioning method according to an embodiment of the present application includes:

transmitting, to a peer end for which a sidelink with a local end has been established, a second positioning reference signal which is configured for the peer end to determine a first positioning measurement quantity by performing positioning measurement on the second positioning reference signal; and determining a second positioning measurement quantity by performing positioning measurement on a first positioning reference signal transmitted by the peer end; and

transmitting the second positioning measurement quantity to the peer end.

In some implementations, the method further includes:

receiving positioning information transmitted by the peer end, where the positioning information is positioning information of the peer end in relation to the local end which is determined by the peer end using the first positioning measurement quantity and the second positioning measurement quantity.

At an LMF entity side, a positioning method according to an embodiment of the present application includes:

transmitting positioning assistance data to a first end and/or a second end for which a sidelink has been established, where the positioning assistance data includes configuration information for a positioning reference signal to be transmitted through the sidelink;

receiving positioning information between the first end and the second end which is transmitted by the first end and/or the second end of the sidelink.

In some implementations, the configuration information includes:

an OFDM symbol for transmitting a positioning reference signal at a $T_{11}$ time instant being adjacent to an OFDM symbol for transmitting a positioning reference signal at a $T_{12}$ time instant; or, an OFDM symbol for transmitting a positioning reference signal at a $T_{11}$ time instant and an OFDM symbol for transmitting a positioning reference signal at a $T_{12}$ time instant being two different positioning reference signal resources configured on adjacent OFDM symbols; where the $T_{11}$ time instant and the $T_{12}$ time instant are two adjacent time instants for transmitting positioning reference signals;

and/or,

during positioning measurement time, the first end and/or the second end of the sidelink being disabled of performing timing and/or frequency adjustment; or, the first end and/or the second end of the sidelink, in case of timing and/or frequency adjustment, needing to report a timing and/or frequency adjustment value or indication information on whether the current timing and/or frequency adjustment is valid.

At one end of a sidelink, a positioning apparatus according to an embodiment of the present application includes a memory, a transceiver and a processor;

where the memory is configured to store a computer program; the transceiver is configured to receive or transmit data under control of the processor; the processor is configured to read the computer program in the memory and perform the following operations:

transmitting a first positioning reference signal to a peer end for which a sidelink with a local end has been established, and determining a first positioning measurement quantity by performing positioning measurement on a second positioning reference signal transmitted by the peer end; and obtaining a second positioning measurement quantity transmitted by the peer end, where the second positioning measurement quantity is obtained by the peer end by performing positioning measurement on the first positioning reference signal; and

determining positioning information by using the first positioning measurement quantity and the second positioning measurement quantity.

In some implementations, the first positioning reference signal is transmitted using one of the following two patterns:

a non-staggered positioning reference signal pattern, in which transmission of a positioning reference signal is repeated with an OFDM symbol as granularity; and

a staggered positioning reference signal pattern, in which transmission of a positioning reference signal is repeated with M OFDM symbols as granularity, where M represents a number of OFDM symbols occupied by a positioning reference signal resource in time domain, and M is a positive integer greater than or equal to 1 and less than 14.

In some implementations, the first positioning measurement quantity includes one or a combination of the following two types of positioning measurement quantities:

a first type of positioning measurement quantity, where the first type of positioning measurement quantity includes one or a combination of the following measurement quantities:

phase of arrival POA values $\varphi_a^i(T_{21})$ and $\varphi_a^i(T_{22})$ at $T_{21}$ and $T_{22}$ time instants, and the corresponding measurement time instants $T_{21}$ and $T_{22}$; where the $T_{21}$ and $T_{22}$ time instants are time instants when the peer end transmits two consecutive repeated positioning reference signals; and

a POA variation from the $T_{21}$ time instant to the $T_{22}$ time instant: $d_{Phi2} = \varphi_a^i(T_{22}) - \varphi_a^i(T_{21})$, and a time interval $dT2$ from the $T_{21}$ time instant to the $T_{22}$ time instant;

a second type of positioning measurement quantity, where the second type of positioning measurement quantity includes one or a combination of the following measurement quantities:

a relative speed or a Doppler frequency offset of the peer end in relation to the local end;

a cumulative sum of oscillator frequency offsets of the peer end and the local end; and

a change rate of the cumulative sum of the oscillator frequency offsets of the peer end and the local end.

In some implementations, the second positioning measurement quantity includes one or a combination of the following two types of positioning measurement quantities:

a first type of positioning measurement quantity, where the first type of positioning measurement quantity includes one or a combination of the following measurement quantities:

phase of arrival POA values $\varphi_a^i(T_{11})$ and $\varphi_a^i(T_{12})$ at $T_{11}$ and $T_{12}$ time instants, and the corresponding measurement time instants $T_{11}$ and $T_{12}$; the $T_{11}$ and $T_{12}$ time instants are time instants when the local end transmits two consecutive repeated positioning reference signals; and

a POA variation from a $T_{11}$ time instant to a $T_{12}$ time instant: $d_{Phi1} = \varphi_a^i(T_{12}) - \varphi_a^i(T_{11})$, and a time interval dT1 from the $T_{11}$ time instant to the $T_{12}$ time instant;

a second type of positioning measurement quantity, where the second type of positioning measurement quantity includes one or a combination of the following measurement quantities:

a relative speed or a Doppler frequency offset of the local end in relation to the peer end;
a cumulative sum of oscillator frequency offsets of the local end and the peer end; and
a change rate of the cumulative sum of the oscillator frequency offsets of the local end and the peer end.

In some implementations, the positioning information includes a Doppler frequency offset determined through the following manner:

using a first ratio of a phase of arrival variation from a $T_{11}$ time instant to a $T_{12}$ time instant to a repetition time interval $T_{12}$ - $T_{11}$ of a first positioning reference signal resource;
determining a second ratio of a phase of arrival variation from a $T_{21}$ time instant to a $T_{22}$ time instant to a repetition time interval $T_{22}$ - $T_{21}$ of a second positioning reference signal resource; and
determining the Doppler frequency offset to be half of a difference between the first ratio and the second ratio;
where the $T_{11}$ and $T_{12}$ time instants are time instants when the local end transmits two consecutive repeated positioning reference signals;
and where the $T_{21}$ and $T_{22}$ time instants are time instants when the peer end transmits two consecutive repeated positioning reference signals.

In some implementations, the positioning information includes an oscillator frequency offset determined through the following manner:

using a first ratio of a phase of arrival variation from a $T_{11}$ time instant to a $T_{12}$ time instant to a repetition time interval $T_{12}$ - $T_{11}$ of a first positioning reference signal resource;
determining a second ratio of a phase of arrival variation from a $T_{21}$ time instant to a $T_{22}$ time instant to a repetition time interval $T_{22}$ - $T_{21}$ of a second positioning reference signal resource; and
determining the oscillator frequency offset to be half of a sum of the first ratio and the second ratio;
where the $T_{11}$ and $T_{12}$ time instants are time instants when the local end transmits two consecutive repeated positioning reference signals;
and where the $T_{21}$ and $T_{22}$ time instants are time instants when the peer end transmits two consecutive repeated positioning reference signals.

In some implementations, the positioning information further includes a change rate of the oscillator frequency offset.
In some implementations, the positioning information further includes a relative distance variation determined through the following manner:

determining a product of the Doppler frequency offset, a preset carrier wavelength, and first measurement time to be a relative distance variation of the local end in relation to the peer end; and/or,
determining a product of the Doppler frequency offset, the preset carrier wavelength, and second measurement time to be a relative distance variation of the peer end in relation to the local end;
where the first measurement time is preset positioning measurement time of the local end; and
where the second measurement time is preset positioning measurement time of the peer end.

In some implementations, the processor is further configured to read the computer program in the memory and perform the following operation:
transmitting the positioning information to the peer end and/or a positioning management function entity.
In some implementations, the processor is further configured to read the computer program in the memory and perform the following operation:

transmitting whether the local end has a positioning capability for determining the positioning information.

In some implementations, the processor is further configured to read the computer program in the memory and perform the following operation:

obtaining positioning assistance data, where the positioning assistance data includes resource configuration information of the first positioning reference signal.

In some implementations, the resource configuration information of the first positioning reference signal includes:

an OFDM symbol for transmitting a positioning reference signal at a $T_{11}$ time instant being adjacent to an OFDM symbol for transmitting a positioning reference signal at a $T_{12}$ time instant; or, an OFDM symbol for transmitting a positioning reference signal at a $T_{11}$ time instant and an OFDM symbol for transmitting a positioning reference signal at a $T_{12}$ time instant being two different positioning reference signal resources configured on adjacent OFDM symbols; where the $T_{11}$ time instant and the $T_{12}$ time instant are two adjacent time instants for transmitting positioning reference signals;

and/or,

during positioning measurement time, the local end being disabled of performing timing and/or frequency adjustment; or, the local end, in case of timing and/or frequency adjustment, needing to transmit, to a network side and/or the peer end, a timing and/or frequency adjustment value or indication information on whether the current timing and/or frequency adjustment is valid.

At the other end of the sidelink, a positioning apparatus according to an embodiment of the present application includes a memory, a transceiver and a processor;

where the memory is configured to store a computer program; the transceiver is configured to receive or transmit data under control of the processor; the processor is configured to read the computer program in the memory and perform the following operations:

transmitting, to a peer end for which a sidelink with a local end has been established, a second positioning reference signal which is configured for the peer end to determine a first positioning measurement quantity by performing positioning measurement on the second positioning reference signal; and determining a second positioning measurement quantity by performing positioning measurement on a first positioning reference signal transmitted by the peer end; and

transmitting the second positioning measurement quantity to the peer end.

In some implementations, the processor is further configured to read the computer program in the memory and perform the following operation:

receiving positioning information transmitted by the peer end, where the positioning information is positioning information of the peer end in relation to the local end which is determined by the peer end using the first positioning measurement quantity and the second positioning measurement quantity.

At an LMF side, a positioning apparatus according to an embodiment of the present application includes a memory, a transceiver and a processor;

where the memory is configured to store a computer program; the transceiver is configured to receive or transmit data under control of the processor; the processor is configured to read the computer program in the memory and perform the following operations:

transmitting positioning assistance data to a first end and/or a second end for which a sidelink has been established, where the positioning assistance data includes configuration information for a positioning reference signal to be transmitted through the sidelink;

receiving relative positioning information between the first end and the second end which is transmitted by the first end and/or the second end of the sidelink.

In some implementations, the configuration information includes:

an OFDM symbol for transmitting a positioning reference signal at a $T_{11}$ time instant being adjacent to an OFDM symbol for transmitting a positioning reference signal at a $T_{12}$ time instant; or, an OFDM symbol for transmitting a positioning reference signal at a $T_{11}$ time instant and an OFDM symbol for transmitting a positioning reference signal at a $T_{12}$ time instant being two different positioning reference signal resources configured on adjacent OFDM symbols; where the $T_{11}$ time instant and the $T_{12}$ time instant are two adjacent time instants for transmitting positioning reference signals;
and/or,
during positioning measurement time, the first end and/or the second end of the sidelink being disabled of performing timing and/or frequency adjustment; or, the first end and/or the second end of the sidelink, in case of timing and/or frequency adjustment, needing to report a timing and/or frequency adjustment value or indication information on whether the current timing and/or frequency adjustment is valid.

At one end of a sidelink, another positioning apparatus according to an embodiment of the present application includes:

a transmitting unit, configured to transmit a first positioning reference signal to a peer end for which a sidelink with a local end has been established, and determine a first positioning measurement quantity by performing positioning measurement on a second positioning reference signal transmitted by the peer end; and obtain a second positioning measurement quantity transmitted by the peer end, where the second positioning measurement quantity is obtained by the peer end by performing positioning measurement on the first positioning reference signal; and
a determining unit, configured to determine positioning information by using the first positioning measurement quantity and the second positioning measurement quantity.

At the other end of the sidelink, another positioning apparatus according to an embodiment of the present application includes:

a first transmitting unit, configured to transmit, to a peer end for which a sidelink with a local end has been established, a second positioning reference signal which is configured for the peer end to determine a first positioning measurement quantity by performing positioning measurement on the second positioning reference signal; and determine a second positioning measurement quantity by performing positioning measurement on a first positioning reference signal transmitted by the peer end; and
a second transmitting unit, configured to transmit the second positioning measurement quantity to the peer end.

At an LMF side, another positioning apparatus according to an embodiment of the present application includes:

a transmitting unit, configured to transmit positioning assistance data to a first end and/or a second end for which a sidelink has been established, where the positioning assistance data includes configuration information for a positioning reference signal to be transmitted through the sidelink;
a receiving unit, configured to receive positioning information between the first end and the second end which is transmitted by the first end and/or the second end of the sidelink.

Another embodiment of the present application provides a processor readable storage medium, storing thereon a computer program, where the computer program is configured to enable a processor to implement any of the aforementioned method.

## BRIEF DESCRIPTION OF DRAWINGS

In order to describe the technical solutions in the embodiments of the present application more clearly, the following will briefly introduce the drawings that need to be used in the description of the embodiments. Apparently, the drawings in the following description are merely for some embodiments of the present application. For those of ordinary skill in the art, other drawings may be obtained based on these drawings without creative efforts.

FIG. 1 is a schematic diagram of a sidelink according to an embodiment of the present application.
FIG. 2 is a schematic diagram of resource configuration of positioning reference signals for a sidelink according to an embodiment of the present application.
FIG. 3 is a specific schematic flowchart of a positioning method according to an embodiment of the present application.
FIG. 4 is a specific schematic flowchart of another positioning method according to an embodiment of the present application.
FIG. 5 is a general schematic flowchart of a positioning method at one end of a sidelink according to an embodiment of the present application.
FIG. 6 is a general schematic flowchart of a positioning method at the other end of a sidelink according to an embodiment of the present application.
FIG. 7 is a general schematic flowchart of a positioning method at an LMF entity side according to an embodiment of

FIG. 8 is a schematic structural diagram of a positioning apparatus at a terminal side according to an embodiment of the present application.

FIG. 9 is a schematic structural diagram of a positioning apparatus at a network side according to an embodiment of the present application.

FIG. 10 is a schematic structural diagram of a positioning apparatus at one end of a sidelink according to an embodiment of the present application.

FIG. 11 is a schematic structural diagram of a positioning apparatus at the other end of a sidelink according to an embodiment of the present application.

FIG. 12 is a schematic structural diagram of a positioning apparatus at an LMF entity side according to an embodiment of the present application.

## DESCRIPTION OF EMBODIMENTS

The term "and/or" in the embodiments of the present application describes an association relationship of associated objects, indicating that there can be three relationships, for example, A and/or B can indicate that A exists alone, A and B exist at the same time, and B exists alone. The character "/" generally indicates that the context objects are in an "or" relationship.

In the embodiments of the present application, the term "a plurality of" refers to two or more, other quantifiers are similar thereto.

The technical solutions according to the embodiments of the present application will be described hereunder clearly and comprehensively in conjunction with the accompanying drawings in the embodiments of the present application. Apparently, the described embodiments are merely some of, rather than all of the embodiments of the present application. Based on the embodiments in the present application, all other embodiments obtained by those of ordinary skill in the art without creative efforts shall fall within the protection scope of present application.

Embodiments of the present application provide a positioning method and apparatus, which are used to achieve positioning of any one of two ends of an established sidelink relative to the other end, thereby achieving a fast positioning solution for sidelink scenarios.

The method and apparatus are based on a same inventive concept. Since the problem-solving principle for the method is similar to that for the apparatus, cross reference can be made between the implementations of the apparatus and the method, and repetitions will not be elaborated.

In the description and claims of the embodiments of the present application, as well as in the above drawings, the terms "first", "second", etc. (if any) are used to distinguish similar objects, and are not necessarily used to describe a specific order or sequence. It should be understood that the terms used in this manner can be interchangeable in appropriate circumstances, such that the embodiments described herein can be implemented in an order other than that is illustrated or described here. Additionally, the terms "including" and "having", as well as any variations of these terms, are intended to cover non-exclusive inclusion. For example, processes, methods, systems, products, or devices that include a series of steps or units are not necessarily limited to those steps or units that are clearly listed but may include other steps or units that are not clearly listed or inherent to such processes, methods, products, or devices.

The following examples and embodiments should only be construed as descriptive examples. Although the present description may mention "one", "a", or "some" examples or embodiments in several places, this does not mean that each of such mentions relates to the same example or embodiment, nor does it mean that the feature is only applicable to a single example or embodiment. Individual features of different embodiments may also be combined to provide other embodiments. Furthermore, terms such as "including" and "containing" should be construed as not limiting the described embodiments solely to a combination of those features that have been mentioned; such examples and embodiments may further include features, structures, units, modules, etc., that have not been specifically mentioned.

The technical solutions provided in the embodiments of the present application can be applied to various systems, especially a 5G system. For example, an applicable system can be a global system of mobile communication (Global System of Mobile Communication, GSM), a code division multiple access (Code Division Multiple Access, CDMA) system, a wideband code division multiple access (Wideband Code Division Multiple Access, WCDMA) general packet radio service (General Packet Radio Service, GPRS) system, a long term evolution (Long Term Evolution, LTE) system, an LTE frequency division duplex (Frequency Division Duplex, FDD) system, an LTE time division duplex (Time Division Duplex, TDD) system, a long term evolution advanced (Long Term Evolution Advanced, LTE-A) system, a universal mobile telecommunication system (Universal Mobile Telecommunication System, UMTS), a worldwide interoperability for microwave access (Worldwide interoperability for Microwave Access, WiMAX) system, a 5G new radio (New Radio, NR) system, and so on. Each of these various systems includes therein a terminal device and a network device. The system can further include a core network part such as an evolved packet system (Evolved Packet System, EPS), a 5G System (5GS) or the like.

A terminal device related to embodiments of the present application, can refer to a device that provides voice and/or data connectivity to a user, a handheld device with a wireless connectivity function, or other processing devices connected to a wireless modem. In different systems, the terminal device may vary in name. For example, in a 5G system, the terminal device can be referred to as a user equipment (User Equipment, UE). A wireless terminal device can communicate with one or more core networks (Core Network, CN) through a RAN. The wireless terminal device can be a mobile terminal device such as a mobile phone (or referred to as a "cellular" phone) and a computer with a mobile terminal device, for example, it can be a mobile apparatus which is portable, pocket-sized, handheld, built-in a computer or vehicle-mounted, and exchanges voice and/or data with the radio access network. For example, a personal communication service (Personal Communication Service, PCS) phone, a cordless phone, a session initiated protocol (Session Initiated Protocol, SIP) phone, a wireless local loop (Wireless Local Loop, WLL) station, a personal digital assistant (Personal Digital Assistant, PDA), or the like. The wireless terminal device can also be referred to as a system, a subscriber unit (subscriber unit), a subscriber station (subscriber station), a mobile station (mobile station), a mobile platform (mobile), a remote station (remote station), an access point (access point), a remote terminal device (remote terminal), an access terminal device (access terminal), a user terminal device (user terminal), a user agent (user agent), a user device (user device), which is not limited in the embodiments of the present application.

The network device referred to in the embodiments of the present application can be a base station, which may include a plurality of cells. Depending on the specific application scenario, a base station can also be referred to as an access point, or it can be referred to as a device in an access network that communicates with a wireless terminal device over one or more sectors on an air interface, or other names. The network device is configured to perform interconversion between received air frames and Internet Protocol (Internet Protocol, IP) packets, serving as a router between wireless terminal devices and other parts of the access network, where other parts of the access network may include an Internet Protocol (IP) communication network. The network device can also coordinate attribute management of the air interface. For example, the network device that is referred to in the embodiments of the present application can be a network device (Base Transceiver Station, BTS) in Global System for Mobile Communications (GSM) or Code Division Multiple Access (CDMA), or a network device (NodeB) in Wideband Code Division Multiple Access (WCDMA), or an evolutional network device (evolutional Node B, eNB or e-NodeB) in a Long Term Evolution (LTE) system, a 5G base station in a 5G network architecture (next generation system), or a home evolved Node B (home evolved Node B, HeNB), a relay node (relay node), a femto (femto), a pico (pico) or the like, which is not limited in the embodiments of the present application. In some network structures, the network device can include a centralized unit (centralized unit, CU) node and a distributed unit (distributed unit, DU) node, where the centralized unit and the distributed unit can be arranged geographically separated.

Each of the network device and the terminal device can use one or multiple antennas for Multi Input Multi Output (Multi Input Multi Output, MIMO) transmission, where the MIMO transmission can be Single User MIMO (Single User MIMO, SU-MIMO) or Multiple User MIMO (Multiple User MIMO, MU-MIMO). Depending on the pattern and quantity of antennas, the MIMO transmission can be 2D-MIMO, 3D-MIMO, FD-MIMO, or massive-MIMO, it can also be diversity transmission, precoding transmission, beamforming transmission, or the like.

The various embodiments of the present application will be described in detail in conjunction with the accompanying drawings of the description as follows. It should be noted that the order in which the embodiments of the present application are presented merely represents a sequence of the embodiments, and does not indicate the superiority or inferiority of the technical solutions provided by the embodiments.

In the embodiments of the present application, it is proposed that during a continuous process of position tracking of a UE, a relative speed of the UE can be calculated based on a change rate of the UE's relative position at different time instants.

Regarding a downlink PRS resource, an uplink SRS-Pos signal, resource configuration information, and related measurement quantities, the following introductions are provided below.

1). Downlink PRS signal and resource configuration information.

For a Release 16 NR downlink PRS resource, the quantity M of OFDM symbols it occupies in the time domain is 2, 4, 6, or 12, and the comb-size (Comb-size) N is 2, 4, 6, or 12. A network configures the comb-size N and the quantity M of OFDM symbols for each downlink PRS resource through a predefined table, supporting only cases where N <= M. A time interval $T_{gap}^{PRS}$ between two repeated downlink PRS resource instances within a same downlink PRS resource set instance is 1, 2, 4, 8, 16, or 32 slots (slots). The current Release 16 (R16) protocol specifies that the basic unit for the time interval of a repeated PRS resource is a slot. A value range of an R16 NR downlink PRS resource period is:

{4,8,16,32,64,5,10,20,40,80,160,320,640,1280,2560,5120,10240} milliseconds;
namely, the R16 NR downlink PRS resource period can range from 4 milliseconds to 10.24 seconds.

Table 1: resource element (Resource Element, RE) relative offset under combinations of comb-size N and quantity M of OFDM symbols supported by a DL PRS:

| Quantity M of symbols / Comb-size N | 2 | 4 | 6 | 12 |
|---|---|---|---|---|
| 2 | {0,1} | {0,1,0,1} | {0,1,0,1,0,1} | {0,1,0,1,0,1,0,1,0,1,0,1} |
| 4 | NA | {0,2,1,3} | NA | {0,2,1,3,0,2,1,3,0,2,1,3}} |
| 6 | NA | NA | {0,3,1,4,2,5} | {0,3,1,4,2,5,0,3,1,4,2,5} |
| 12 | NA | NA | NA | {0,6,3,9,1,7,4,10,2,8,5,11} |

2). Downlink PRS-related positioning measurement quantities.

Downlink positioning measurement quantities include: a downlink reference signal time difference (RSTD), downlink positioning reference signal received power (RSRP), downlink positioning reference signal received power of a subpath (RSRPP), and a UE receive-transmit time difference (UE Rx-Tx time difference). The time stamp (Time stamp) associated with the measurement quantities reported by a UE includes a system frame number and a slot number, with the basic granularity being a slot. Currently, the RSTD measurement quantity is generally obtained based on M=4 measurement instances. The measurement instances, for example, a PRS resource is transmitted repeatedly twice within an 80ms period, each PRS transmission is referred to as a measurement instance, meaning that two measurement instances occur within 80ms.

3). Uplink uplink sounding reference signal for positioning (Sounding Reference Signal for Positioning, SRS-Pos) and resource configuration information.

For a Release 16 NR uplink SRS-Pos resource, the quantity M of OFDM symbols it occupies in the time domain is 1, 2, 4, 8, or 12, and the comb-size N is 2, 4, or 8, as shown in Table 2.

Table 2: RE relative offset under combinations of comb-size N and quantity M of OFDM symbols supported by an SRS-Pos:

| $K_{TC}$ | $k^0_{offset}, ..., k^{N^{SRS}_{symb}-1}_{offset}$ | | | | |
|---|---|---|---|---|---|
| | $N^{SRS}_{symb} = 1$ | $N^{SRS}_{symb} = 2$ | $N^{SRS}_{symb} = 4$ | $N^{SRS}_{symb} = 8$ | $N^{SRS}_{symb} = 12$ |
| 2 | 0 | 0,1 | 0,1,0,1 | - | - |
| 4 | - | 0, 2 | 0, 2, 1, 3 | 0, 2, 1, 3, 0, 2, 1, 3 | 0, 2, 1, 3, 0, 2, 1, 3, 0, 2, 1, 3 |
| 8 | - | - | 0, 4, 2, 6 | 0, 4, 2, 6, 1, 5, 3, 7 | 0, 4, 2, 6, 1, 5, 3, 7, 0, 4, 2, 6 |

The SRS-Pos supports three resource types: a periodic SRS-Pos, a semi-persistent SRS-Pos, and an aperiodic SRS-Pos. A period for a periodic SRS-Pos is {1, 2, 4, 5, 8, 10, 16, 20, 32, 40, 64, 80, 160, 320, 640, 1280, 2560, 5120, 10240} milliseconds, namely, ranging from 1 millisecond to 10.24 seconds.

4). Uplink SRS-Pos-related positioning measurement quantities.

Uplink positioning measurement quantities include: a measurement quantity of uplink relative time of arrival, a measurement quantity of uplink positioning sounding reference signal received power, a measurement quantity of uplink positioning sounding reference signal received power of a subpath, a measurement quantity of uplink angle of arrival, or other uplink positioning measurement quantities.

When a base station reports to a positioning server the aforementioned measurement quantities such as uplink relative time of arrival, uplink sounding reference signal received power, uplink sounding reference signal received power of a subpath, uplink angle of arrival, or others, the base station can, at the same time, report the timestamps associated with the measurement quantities, including a system frame number and a slot number corresponding to a reported subcarrier spacing, for indicating a valid time of the reported measurement quantities of this time.

However, for performing fast UE relative speed measurement or calculating a relative position variation of a UE in a high-speed UE motion scenario, the above methods have two problems.

First, the measurement accuracy of time of arrival (Time of Arrival, TOA) based and angle of arrival (Angle of Arrival, AOA) based ranging is not high. TOA is limited by a signal bandwidth, and AOA is limited by the quantity of receiving antennas.

Second, the latency is relatively high. Since the relative position variation of the UE can only be obtained based on a TOA measurement quantity after the UE has moved by a sufficient distance, relatively high latency is thus caused, which is detrimental to fast UE speed measurement in a highway scenario.

In the high-speed scenario, if averaging is performed for sidelink positioning reference signals (SL-PRS) and/or sidelink sounding reference signals (SL-SRS), or TOA and/or phase of arrival (Phase of Arrival, POA) measurement quantities at different time instants, degradation in measurement accuracy performance will occur when a time interval between the signals or measurement quantities being averaged exceeds the coherence time.

For example: fc=3.5GHz, v=500km/h (considering a one-way V2X maximum speed of 250km/h), c=3.0*10^8(m/s), and a subcarrier spacing f_SCS=30KHz;

a maximum Doppler frequency offset is fd_max=v/lamda = v/c*fc=1.6KHz; and

a normalized maximum Doppler frequency offset is delta_fd_max = fd_max/f_SCS=0.053.

Considering a maximum time interval T for coherent combining, which needs to satisfy delta_fd_max*T<=1/2, it can be calculated that T<=9.4.

Therefore, for the high-speed scenario with a maximum terminal speed of v=500km/h, the aforementioned PRS signal format and configuration method are unsuitable, for which the specific reasons include:

1) acquiring one positioning measurement quantity from M>1 measurement instances;
2) the basic unit for a time interval of a repeated PRS resource being a slot;
3) the maximum quantity of OFDM symbols occupied by a DL PRS resource and a UL SRS-Pos resource being 12.

In the following embodiments of the present application, a method for performing fast relative positioning in a sidelink is provided, where any one of two ends of the Sidelink rapidly measures its positioning information relative to the other end based on bidirectional carrier phase difference measurement quantities at different time instants. The aforementioned positioning information can also be referred to as a relative speed or a relative position variation. The relative speed can be determined through a Doppler frequency offset, and the relative position variation can be determined through a relative distance variation. Additionally, the positioning information can further include information such as an oscillator frequency offset used for relative positioning.

The embodiments of the present application can be used for relative positioning of a Sidelink between a UE and a network-side entity (such as a gNB, TRP, RSU, etc.), relative positioning of Sidelink between two UEs, and relative positioning of RedCap UEs (reduced capability UEs, that is, reduced capability terminals) on a Uu interface.

Namely, either end of an established sidelink may be an entity such as a terminal (UE), base station (gNB), transmission and reception point (Transmission and Reception Point, TRP), road side unit (Road Side Unit, RSU), etc.

The positioning method provided in the embodiments of the present application includes the following contents.

1. The embodiments of the present application provide new SL-PRS patterns, including the following two types:

the first SL-PRS pattern: a redesigned non-staggered (non-staggered) PRS pattern (pattern), where repetition is performed with an orthogonal frequency division multiplexing (Orthogonal Frequency Division Multiplexing, OFDM) symbol as granularity, namely, the basic unit for the time interval of a repeated PRS resource is an OFDM symbol.
the second SL-PRS pattern: a new PRS pattern constructed by reusing the existing staggered (staggered) PRS pattern in combination with, as proposed in the embodiments of the present application, the repetition with a quantity M of OFDM symbols occupied by a PRS resource as granularity.

Namely, in some embodiments, when an SL-PRS is transmitted by either ends of the sidelink, according to the pattern, the transmission of the positioning reference signal is performed repeatedly with an OFDM symbol as granularity, thus avoiding or reducing the impact of the Doppler frequency offset on positioning accuracy for high-speed UE positioning, thereby improving the positioning accuracy.

In a specific application, the use of the aforementioned SL-PRS patterns depends on a practical need, which is not limited in the embodiments of the present application.

In some embodiments, considering the need to support high-speed Sidelink scenarios, an SL-PRS does not support 12 OFDM symbols, instead, the present application newly adds supporting for a case with 1 OFDM symbol, namely, M=1, 2, 4, or 6, and supports N>M, where N represents the Comb-size, thereby to support distinguishing SL-PRS signals from multiple gNBs and/or TRPs and/or RSUs using different resource element (Resource Element, RE) shifts (shifts) under a given Comb-size N. For example, when Comb-Size N=6, RE shifts= 0, 1, 2, 3, 4 and 5 are used to represent SL-PRSs from six gNBs and/or TRPs and/or RSUs, respectively.

It can be seen that, compared to that a Release 16 DL PRS resource in a 5G NR Uu interface has a repetition period with a slot as basic granularity, the repetition granularity of an SL-PRS resource in the embodiments of the present application is based on an OFDM symbol level or the number of OFDM symbols occupied by the SL-PRS resource, with application scenarios including Sidelink positioning, Uu interface RedCap UE positioning, etc. Both the OFDM symbol and the number of OFDM symbols occupied by the SL-PRS resource in the time domain are less than a number of OFDM symbols contained in a slot, thereby further improving positioning accuracy and efficiency.

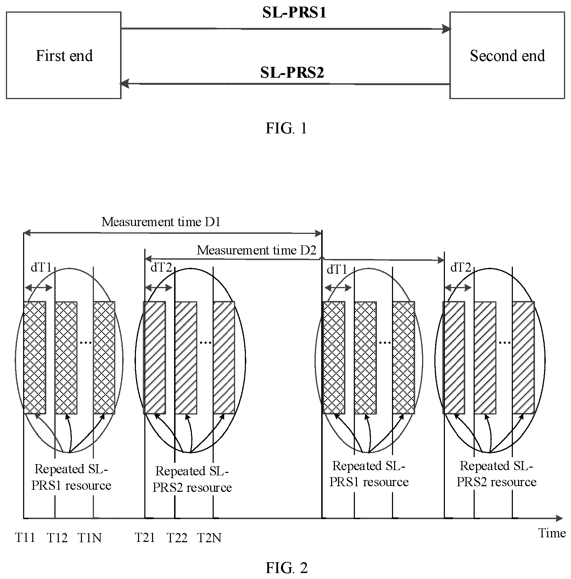

With reference to FIG. 1, two ends (a first end and a second end) of a sidelink transmit an SL-PRS to each other, where SL-PRS1 and SL-PRS2 represent, respectively, a positioning reference signal (which can also be referred to as a first positioning reference signal) transmitted by the first end to the other end through the Sidelink (abbreviated as SL) and a positioning reference signal (referred to as a second positioning reference signal) transmitted by the second end to the other end through the SL.

For example, the first end is a first UE (which can also be referred to as a target UE to be positioned), and the second end is a second UE (which can also be referred to as an anchor UE).

Or, the first end is a UE, and the second end is a network-side entity such as a gNB, TRP, or RSU.

2. Configuration of SL-PRS resource:

the configuration of an SL-PRS resource, for example, is as shown in FIG. 2, where dT1 represents a repetition time interval of an SL-PRS 1 resource, dT2 represents a repetition time interval of an SL-PRS2 resource, and $T_{21}$ - $T_{11}$ represents a time interval between the first end transmitting SL-PRS1 and the second end transmitting SL-PRS2.

In some embodiments, as shown in FIG. 2, dT1, dT2, and $T_{21}$ - $T_{11}$ are as short as possible, which is intended to ensure that the oscillator frequency offsets of both ends of the sidelink remain roughly unchanged (or a time change value is less than an expected threshold). For example:

repeated positioning reference signals can belong to two adjacent OFDM symbols of a same SL-PRS resource, for example, the OFDM symbol for transmitting an SL-PRS at a T11 time instant is adjacent to the OFDM symbol for transmitting an SL-PRS at a T12 time instant;

or, the OFDM symbol for transmitting an SL-PRS at a T11 time instant and the OFDM symbol for transmitting an SL-PRS at a T12 time instant belong to two different SL-PRS resources configured on adjacent OFDM symbols. For example: within a slot, the repetition for an SL-PRS1 resource is twice, with the first SL-PRS1 resource occupying OFDM symbols 0 and 1, and the second SL-PRS 1 resource occupying OFDM symbols 2 and 3; and within a slot, the repetition for an SL-PRS2 resource is twice, with the first SL-PRS2 resource occupying OFDM symbols 5 and 6, and the second SL-PRS2 resource occupying OFDM symbols 7 and 8.

In some embodiments, the resources for the SL-PRS 1 and SL-PRS2 can be configured within a same slot.

In some embodiments, during the entire measurement time D1 and/or measurement time D2, either end of the sidelink can be configured such that it is disabled of performing timing and/or frequency adjustment; or, either end of the sidelink, in case of timing and/or frequency adjustment, needs to report, to a network and/or the other end, a timing and/or frequency adjustment value or indication information on whether the current timing and/or frequency adjustment is valid, for the network and/or the other end to determine whether the current measurement quantity is valid, and whether updating is required. The mentioned timing and/or frequency adjustment, for example, includes: a time advance command (Time Advance Command, TAC), and/or autonomous time adjustment (Autonomous Time Adjustment, ATA), and/or autonomous frequency adjustment (Autonomous Frequency Adjustment, AFA).

It should be noted that, in the embodiments of the present application, the mentioned T11, T12, T21, and T22 are equivalent to $T_{11}$, $T_{12}$, $T_{21}$ and $T_{22}$, respectively.

3. In some embodiments, positioning measurement quantities include one type of the following two types, or one or more measurement quantities of the two types.

A first type of positioning measurement quantity, specifically including one or a combination of the following:

carrier phase (POA) values $\varphi_a^i(T_{11}),\ \varphi_a^i(T_{12}),\ \varphi_a^i(T_{21})$, and $\varphi_a^i(T_{22})$ (the unit is radian or meter) at $T_{11}$, $T_{12}$, $T_{21}$ and $T_{22}$ time instants;

measurement time instants $T_{11}$, $T_{12}$, $T_{21}$ and $T_{22}$ (the unit is OFDM symbol or second);

a POA variation from the $T_{11}$ time instant to the $T_{12}$ time instant: $d_{Phi1} = \varphi_a^i(T_{12}) - \varphi_a^i(T_{11})$ (the unit is radian or meter);

a POA variation from the $T_{21}$ time instant to the $T_{22}$ time instant: $d_{Phi2} = \varphi_a^i(T_{22}) - \varphi_a^i(T_{21})$ (the unit is radian or meter);

time intervals dT1 and dT2 (the unit is OFDM symbol or second).

A second type of positioning measurement quantity, specifically including one or a combination of the following:

a relative speed or Doppler frequency offset f_dop (unit: Hz) of a terminal;
an oscillator frequency offset f_osc (unit: Hz) of the terminal; and
a change rate of the oscillator frequency offset d_f_osc (unit: Hz) of the terminal.

In a specific application, the use of one or more of the aforementioned positioning measurements depends on a practical need, which is not limited in the embodiments of the present application.

In some embodiments, the number of OFDM symbols (the value of M) used for calculating the positioning measurement quantities, as well as information such as whether averaging processing is used, are indicated to the peer end and/or a network side. Regarding the averaging processing, for example, the UE performs averaging processing on M=4 OFDM symbols, meaning the UE performs averaging on received signals of the 4 OFDM symbols and then calculates the measurement quantities.

4. UE capability reporting and interaction process between a UE and a network side (including, for example, an LMF and/or base station).

In some embodiments, based on the signaling process between the UE and the network side, assuming that the UE needs to report its capability to estimate a Doppler frequency offset and/or oscillator frequency offset, accordingly, the network side can determine, based on the positioning capability of the UE, configuration information of a DL PRS and/or UL SRS and notify the UE, and request the UE, based on the positioning capability of the UE, to report positioning measurement quantities.

In some embodiments, the signaling process between an LMF and a gNB can be enhanced as well to support the capability for a Doppler frequency offset and/or oscillator frequency offset.

5. UE capability reporting and interaction process between different UEs in SL positioning.

In some embodiments, for SL positioning, UEs will perform information exchange to support a function of whether the aforementioned two types of positioning measurement quantities can be determined. For example, two UEs at both ends of the SL notify each other whether they have the capability to determine a carrier phase difference measurement quantity, as well as the capability to determine a Doppler frequency offset and/or oscillator frequency offset.

6. The calculation methods for a Doppler frequency offset, an oscillator frequency offset, and a relative distance variation.

In some embodiments, upon obtaining the first type of positioning measurement quantity, a PRS receiving end (for example, the target UE) or the LMF can measure and obtain, based on a phase change in $T_{21}$ - $T_{11}$ time interval, the second type of positioning measurement quantity, including: a UE relative speed or Doppler frequency offset; measuring an oscillator frequency offset, as well as a change rate of the oscillator frequency offset and a relative distance variation.

$$\varphi_a^i(T_{12}) - \varphi_a^i(T_{11}) = d_{\mathrm{Phi1}} = (\mathrm{f\_dop\_i} + \mathrm{f\_osc}) * \mathrm{dT1} \qquad (1)$$

$$\varphi_a^i(T_{22}) - \varphi_a^i(T_{21}) = d_{\text{Phi2}} = (-\text{f\_dop\_i} + \text{f\_osc}) * \text{dT2} \qquad (2)$$

where f_dop_i represents the Doppler frequency offset, f_osc represents the oscillator frequency offset, and $\varphi_a^i(T_{11}), \; \varphi_a^i(T_{12}), \; \varphi_a^i(T_{21})$, and $\varphi_a^i(T_{22})$ (the unit is radian or meter) represent, respectively, carrier phase (POA) values at $T_{11}$, $T_{12}$, $T_{21}$ and $T_{22}$ time instants; $d_{\text{Phi1}} = \varphi_a^i(T_{12}) - \varphi_a^i(T_{11})$ represents a POA variation (the unit is radian or meter) from the $T_{11}$ time instant to the $T_{12}$ time instant; $d_{\text{Phi2}} = \varphi_a^i(T_{22}) - \varphi_a^i(T_{21})$ represents a POA variation (the unit is radian or meter) from the $T_{21}$ time instant to the $T_{22}$ time instant; dT1 $= T_{12} - T_{11}$ represents a repetition time interval of an SL-PRS1 resource; and dT2 $= T_{22} - T_{21}$ represents a repetition time interval of an SL-PRS2 resource.

With the above two simultaneous equations (1) and (2), we can obtain:

$$\text{f\_dop\_i} = (d_{\text{Phi1}}/\text{dT1} - d_{\text{Phi2}}/\text{dT2})/2; \qquad (3)$$

$$\text{f\_osc} = (d_{\text{Phi1}}/\text{dtT1} + d_{\text{Phi2}}/\text{dT2})/2; \qquad (4)$$

where f_osc= f_osc_UE1 + f_osc_UE2, which includes a cumulative sum of oscillator frequency offsets of two UEs (UE1 and UE2) at both ends of the sidelink.

The role of estimating f_osc separately is that, if f_osc can be accurately estimated, its effect can be eliminated in subsequent fast measurement (for example, using traditional SL-RTT). If it changes linearly in a certain period, a change rate of the oscillator frequency offset can be calculated for compensation in advance.

In some embodiments, a method for calculating the change rate of the oscillator frequency offset and the application of the change rate are as follows.

Assuming that the oscillator frequency offset has a linear change rate, for example, the oscillator frequency offset is approximately constant between T1 and T2, the oscillator frequency offset is approximately constant between T3 and T4, and the oscillator frequency offset changes linearly from T2 to T3. Then a calculation formula for a linear change rate of the oscillator frequency offset is as follows:

$$\text{d\_f\_osc} = (\text{f\_osc}(T3) - \text{f\_osc}(T2)) / (T3 - T2) \qquad (5)$$

where f_osc (T3) represents an oscillator frequency offset at T3 time instant, and f_osc (T2) represents an oscillator frequency offset at T2 time instant.

In some embodiments, if the oscillator frequency offset has a regular change rate (for example, linear change), prediction in advance based on historical values and a change rule, and pre-compensation based on measurement quantities can be performed.

In some embodiments, a calculation formula for the relative distance variation is, for example:

$$\text{relative distance variation } \text{d\_relative1} = v * D1 = \text{f\_dop\_i} * \text{lamda} * D1;$$

or,

$$\text{d\_relative2} = -v * T2 = -\text{f\_dop\_i} * \text{lamda} * D2.$$

where D1 and D2 represent, respectively, preset measurement time at the first end of the sidelink and preset measurement time at the second end of the sidelink, and lamda represents a preset carrier wavelength.

The following provides illustrative description for two specific embodiments.

Embodiment 1: SL positioning between two UEs.

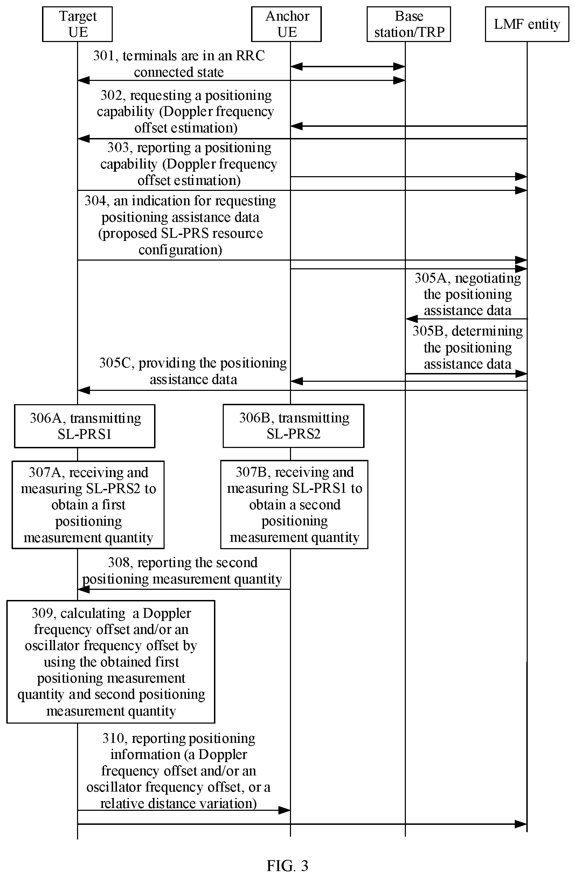

With reference to FIG. 3, in this embodiment, among the two UEs between which a sidelink is established, a target UE transmits SL-PRS1, and an anchor UE transmits SL-PRS2. The positioning method according to the embodiment includes the following steps.

301, a target UE and an anchor UE, having established connections with a service base station respectively, are in a radio resource control connected (RRC_CONNECTED) state.

302, an LMF entity requests, respectively, a positioning capability (a capability for Doppler frequency offset estimation) from the target UE and the anchor UE.

303, the target UE and the anchor UE report positioning capabilities (the capabilities for Doppler frequency offset estimation) to the LMF entity respectively.

304, the target UE and the anchor UE transmit, to the LMF entity respectively, indications for requesting positioning assistance data (carrying their respective proposed SL-PRS resource configurations).

305A, the LMF entity negotiates the positioning assistance data with a base station or TRP.

305B, the base station or TRP determines the positioning assistance data and transmits it to the LMF entity.

305C, the LMF entity provides the positioning assistance data to the target UE and the anchor UE.

306A, the target UE transmits SL-PRS1 (a first positioning reference signal) to the anchor UE.

306B, the anchor UE transmits SL-PRS2 (a second positioning reference signal) to the target UE.

307A, the target UE receives and measures SL-PRS2 to obtain a first positioning measurement quantity.

307B, the anchor UE receives and measures SL-PRS1 to obtain a second positioning measurement quantity.

308, the anchor UE transmits the second positioning measurement quantity to the target UE.

309, the target UE, by using the obtained first positioning measurement quantity and second positioning measurement quantity, calculates positioning information including a Doppler frequency offset and/or an oscillator frequency offset and/or a relative distance variation.

310, the target UE transmits, to the anchor UE and the LMF entity, the positioning information including the Doppler frequency offset and/or the oscillator frequency offset and/or the relative distance variation.

Specifically, at a target UE side, a positioning method in the embodiment includes:

Step 301, a target UE, having established a connection with a service base station, is in a radio resource control connected (RRC_CONNECTED) state.

Step 302, the LMF transmits a "positioning capability request" message (including a capability for Doppler frequency offset estimation) to the target UE, to request the UE to notify the LMF of a positioning function that the UE can support. The "positioning capability request" message includes the capabilities that the UE has for Doppler frequency offset and/or oscillator frequency offset estimation.

Step 303, the target UE transmits, in response to the LMF, a "positioning capability provision" message, the "positioning capability provision" message reporting a positioning capability of the UE, including Doppler frequency offset estimation.

Step 304, the target UE transmits a "positioning assistance data request" message to the LMF. This message includes a request for positioning assistance data for SL-PRS1 and SL-PRS2 from the LMF, containing configuration information for SL-PRS 1 and SL-PRS2.

In order to quickly measure relative speed, configuration requirements for SL-PRS1 and SL-PRS2 resources in the embodiment are as follows.

Firstly, as shown in FIG. 2, dT1, dT2, and $T_{21}$ - $T_{11}$ are as short as possible, which is intended to ensure that the oscillator frequency offsets of the UE and the base station/TRP/RSU remains roughly unchanged (or a time change value is less than an expected threshold). For example, repeated positioning reference signals can belong to two adjacent OFDM symbols of a same SL-PRS resource. For example, the OFDM symbol for transmitting an SL-PRS at a time T11 time instant is adjacent to the OFDM symbol for transmitting an SL-PRS at a time T12 time instant; or they can belong to two different SL-PRS resources configured on adjacent OFDM symbols. For example: within a slot, an SL-PRS1 resource repeats twice, with the first SL-PRS1 resource occupying OFDM symbols 0 and 1, and the second SL-PRS1 resource occupying OFDM symbols 2 and 3; and within a slot, an SL-PRS2 resource repeats twice, with the first SL-PRS2 resource occupying OFDM symbols 5 and 6, and the second SL-PRS2 resource occupying OFDM symbols 7 and 8. In some embodiments, SL-PRS1 and SL-PRS2 can be within a same slot.

Secondly, during the entire measurement time D1 and D2, there should not be TAC and/or ATA and/or AFA adjustment for the UE; or, the UE, in case of TAC and/or ATA and/or AFA adjustment, reports a TAC/ATA/AFA adjustment value or indication information on whether the current TAC/ATA/AFA is valid, to a network (or a SL-UE of the other end), such that the network (or the SL-UE of the other end) determines whether a current measurement quantity is valid, and whether an update is needed.

Step 305C, the target UE receives the positioning assistance data, including configuration information for SL-PRS1 and SL-PRS2, provided by the LMF through a "positioning assistance data provision" message.

Step 306A, the target UE transmits an SL-PRS1 signal to an anchor UE.

A pattern of the SL-PRS1 signal includes two options:

Opt. 1: redesigning a non-staggered PRS pattern (namely, with an OFDM symbol as a period).

Opt. 2: reusing the existing staggered PRS pattern + the repetition with a quantity M of OFDM symbols of a PRS resource as granularity, to construct a new PRS pattern.

Considering the need to support high-speed sidelink scenarios, an SL-PRS does not support 12 OFDM symbols, instead, adds supporting for 1 OFDM symbol, namely, M=1, 2, 4, or 6, and supports N>M, thereby to support distinguishing SL-PRS signals from multiple TRPs or RSUs using different RE shifts under a given Comb-size N.

It should be noted that, compared to that a DL PRS resource in a 5G NR Uu interface has a repetition period with a slot as basic granularity, the repetition granularity of an SL-PRS resource in the embodiments is based on an OFDM symbol level or an SL-PRS resource, with application scenarios including Sidelink positioning, and Uu interface RedCap UE positioning.

Step 307A, the target UE receives and measures SL-PRS2 from the anchor UE, to obtain a first positioning measurement quantity.

The first positioning measurement quantity includes two options:

Opt 1: carrier phase (POA) values $\varphi_a^i(T_{21})$, and $\varphi_a^i(T_{22})$ at $T_{21}$ and $T_{22}$ time instants (the unit is radian or meter), and the corresponding measurement time instants $T_{21}$ and $T_{22}$ (the unit is OFDM symbol or second);

or, a POA variation from the $T_{21}$ time instant to the $T_{22}$ time instant: $d_{Phi2} = \varphi_a^i(T_{22}) - \varphi_a^i(T_{21})$ (the unit is radian or meter), and a corresponding time interval dT2 (the unit is OFDM symbol or second).

Opt 2: a relative speed or Doppler frequency offset f_dop (unit: Hz) of the anchor UE in relation to the target UE, an oscillator frequency offset f_osc (unit: Hz) of the anchor UE, and a change rate of the oscillator frequency offset d_f_osc (unit: Hz) of the UE2.

In some implementations, UE, when reporting a positioning measurement quantity, indicates the number of OFDM symbols used to calculate the positioning measurement quantity, and whether averaging processing is used. For example, averaging processing is performed on M=4 OFDM symbols, namely, the UE performs averaging on received signals of the 4 OFDM symbols and then calculates the measurement quantities.

Step 308, the target UE receives a second positioning measurement quantity reported by the anchor UE.

The second positioning measurement quantity includes two options:

Opt. 1: carrier phase (POA) values $\varphi_a^i(T_{11})$ and $\varphi_a^i(T_{12})$, (the unit is radian or meter) at $T_{11}$ and $T_{12}$ time instants, and the corresponding measurement time instants $T_{11}$ and $T_{12}$ (the unit is OFDM symbol or second);

or a POA variation from a $T_{11}$ time instant to a $T_{12}$ time instant: $d_{Phi1} = \varphi_a^i(T_{12}) - \varphi_a^i(T_{11})$ (the unit is radian or meter), and a corresponding time interval dT1 (the unit is OFDM symbol or second).

Opt. 2: a relative speed or Doppler frequency offset f_dop (unit: Hz) of the target UE in relation to the anchor UE, a cumulative sum of oscillator frequency offsets f_osc (unit: Hz) of the target UE and the anchor UE, and a change rate of the cumulative sum of the oscillator frequency offsets d_f_osc (unit: Hz) of the target UE and the anchor UE.

In some implementations, UE, when reporting a positioning measurement quantity, indicates the number of OFDM symbols used to calculate the positioning measurement quantity, and whether averaging processing is used. For example, averaging processing is performed on M=4 OFDM symbols, namely, the UE first performs averaging on received signals of the 4 OFDM symbols and then calculates the measurement quantities.

Step 309, the target UE, by using the first positioning measurement quantity obtained by itself and the second positioning measurement quantity reported by the anchor UE, calculates a Doppler frequency offset and/or an oscillator frequency offset.

The calculation methods for Doppler frequency offset and oscillator frequency offset are as follows.

The target UE, having obtained the positioning measurement quantity according to Opt. 1 of Step 307A and Step 308, can measure, based on the phase changes during dT1 and dT2 time intervals, to obtain the positioning measurement quantity according to Opt. 2, including: a UE speed or Doppler frequency offset, and a cumulative sum of the oscillator frequency offsets of the target UE and the anchor UE or a change rate of the cumulative sum of the oscillator frequency offsets of the target UE and the anchor UE.

$$\varphi_a^i(T_{12}) - \varphi_a^i(T_{11}) = d_{Phi1} = (f\_dop\_i + f\_osc) * dT1 \qquad (5)$$

$$\varphi_a^i(T_{22}) - \varphi_a^i(T_{21}) = d_{Phi2} = (-f\_dop\_i + f\_osc) * dT2 \qquad (6)$$

where f_dop_i represents the Doppler frequency offset, f_osc represents the oscillator frequency offset, and $\varphi_a^i(T_{11})$, $\varphi_a^i(T_{12})$, $\varphi_a^i(T_{21})$, and $\varphi_a^i(T_{22})$ (the unit is radian or meter) represent, respectively, carrier phase (POA) values at $T_{11}$, $T_{12}$, $T_{21}$ and $T_{22}$ time instants; $d_{Phi1} = \varphi_a^i(T_{12}) - \varphi_a^i(T_{11})$ represents a POA variation (the unit is radian or meter) from the $T_{11}$ time instant to the $T_{12}$ time instant; $d_{Phi2} = \varphi_a^i(T_{22}) - \varphi_a^i(T_{21})$ represents a POA variation (the unit is radian or meter) from the $T_{21}$ time instant to the $T_{22}$ time instant; dT1 = $T_{12}$ - $T_{11}$ represents a repetition time interval of an SL-PRS 1 resource; and dT2 = $T_{22}$ - $T_{21}$ represents a repetition time interval of an SL-PRS2 resource.

With the above two simultaneous equations (5) and (6), we can obtain:

$$f\_dop\_i = (d_{Phi1}/dT1 - d_{Phi2}/dT2)/2; \qquad (7)$$

$$f\_osc = (d_{Phi1}/dtT1 + d_{Phi2}/dT2)/2; \qquad (8)$$

where f_osc= f_osc_UE1 + f_osc_UE2, which includes a cumulative sum of oscillator frequency offsets of two UEs (the target UE and the anchor UE). The role of estimating f_osc separately is that, if f_osc can be accurately estimated, its effect can be eliminated in subsequent fast measurement (for example, using traditional SL-RTT). If it changes linearly in a certain period, a change rate of the oscillator frequency offset can be calculated for compensation in advance.

A method for calculating the change rate of the oscillator frequency offset is as follows: assuming that the oscillator frequency offset has a linear change rate, for example, being approximately constant between T1 and T2, approximately constant between T3 and T4, and changing linearly from T2 to T3. Then a calculation formula for a linear change rate of the oscillator frequency offset is as follows: d_f_osc = (f_osc(T3)- f_osc(T2)) / (T3-T2).

Step 310, the target UE reports, to the target UE and the LMF, the positioning information (the Doppler frequency offset and/or oscillator frequency offset and/or relative distance variation).

For example: the relative distance variation d_relative1 = v * D1 = f_dop_i * lamda * D1; or,

$$d\_relative2 = -v * T2 = -f\_dop\_i * lamda * D2.$$

where D1 and D2 represent measurement time, and lamda represents a carrier wavelength.

If the oscillator frequency offset has a regular change rate (for example, linear change), prediction in advance based on historical values and a change rule, and linear weighting based on measurement quantities can be performed. For example, a linear change rate of the oscillator frequency offset at the T3 time instant predicted based on the T2 time instant:

$$d\_f\_osc\_pre = (f\_osc(T3)- f\_osc(T2)) / (T3-T2).$$

At the T3 time instant, the actually measured oscillator frequency offset according to equation (8) is f_osc_meas(T3). Linear weighting processing can be applied based on the following equation, as shown in equation (9).

f_osc(T3) = Factor * f_osc_meas(T3) + (1 - Factor) * [f_osc_meas(T2) + d_f_osc_pre * (T3 - T2)]    (9)

At an anchor UE side, a positioning method according to the embodiment includes:
Step 301, an anchor UE, having established a connection with a service base station, is in a radio resource control connected (RRC_CONNECTED) state.

Step 302, the LMF transmits a "positioning capability request" message (including a capability for Doppler frequency offset estimation) to the anchor UE, to request the UE to notify the LMF of a positioning function that the UE can support.

Step 303, the anchor UE transmits, in response to the LMF, a "positioning capability provision" message. The "positioning capability provision" message reports a positioning capability of the anchor UE, including Doppler frequency offset estimation.

Step 304, the anchor UE transmits a "positioning assistance data request" message to the LMF. This message includes a request for positioning assistance data for SL-PRS1 and SL-PRS2 from the LMF.

In order to measure relative speed quickly, configuration requirements for an SL-PRS2 resource are as follows.

Firstly, the time interval between dT1 and dT2 are as short as possible, which is intended to ensure that the oscillator frequency offsets of the target UE and the anchor UE remains roughly unchanged (or a time change value is less than an expected threshold). For example: repeated positioning reference signals can belong to two adjacent OFDM symbols of a same SL-PRS resource; or belong to two different SL-PRS resources configured on adjacent OFDM symbols.

Secondly, during the entire measurement time, there should not be TAC and/or ATA and/or AFA adjustment for the anchor UE, or the anchor UE reports a TAC/ATA/AFA adjustment value or indication information on whether the current TAC/ATA/AFA is valid, to a network (or an anchor UE of the other end).

Step 305C, the anchor UE receives the positioning assistance data, containing configuration information for SL-PRS1 and SL-PRS2, provided by the LMF through a "positioning assistance data provision" message.

Step 306B, the anchor UE transmits an SL-PRS2 signal to a target UE.

A pattern of the SL-PRS2 signal includes two options, which is the same as the SL-PRS1 signal in step 306A.

Step 307B, the anchor UE receives and measures the SL-PRS1 from the target UE to obtain the second positioning measurement.

The second positioning measurement quantity includes two options:

Opt. 1: carrier phase (POA) values $\varphi_a^i(T_{11})$ and $\varphi_a^i(T_{12})$ (the unit is radian or meter) at $T_{11}$ and $T_{12}$ time instants, and the corresponding measurement time instants $T_{11}$ and $T_{12}$ (the unit is OFDM symbol or second);

or a POA variation from a $T_{11}$ time instant to a $T_{12}$ time instant: $d_{Phi1} = \varphi_a^i(T_{12}) - \varphi_a^i(T_{11})$ (the unit is radian or meter), and a corresponding time interval dT1 (the unit is OFDM symbol or second).

Opt. 2: a relative speed or Doppler frequency offset f_dop (unit: Hz) of the target UE in relation to the anchor UE, a cumulative sum of oscillator frequency offsets f_osc (unit: Hz) of the target UE and the anchor UE, and a change rate of the cumulative sum of the oscillator frequency offsets d_f_osc (unit: Hz) of the target UE and the anchor UE.

In some implementation, a UE, when reporting a positioning measurement quantity, indicates the number of OFDM symbols used to calculate the positioning measurement quantity, and whether averaging processing is used. For example, averaging processing is performed on M=4 OFDM symbols, namely, the UE first performs averaging on received signals of the 4 OFDM symbols and then calculates the measurement quantities.

Step 308, the anchor UE reports a second positioning measurement quantity to the target UE.

Step 310, the anchor UE receives positioning information reported by the target UE (the Doppler frequency offset and/or oscillator frequency offset and/or relative distance variation).

At an LMF entity side, a positioning method according to the embodiment includes:

Step 305A, an LMF transmits a "positioning assistance data negotiation" message to a base station, this message requesting that the base station provide positioning assistance data, for example, PRS configuration data.

Step 305B, the LMF receives the positioning assistance data transmitted by the base station, containing configuration information for SL-PRS1 and SL-PRS2.

Step 305C, the LMF provides, in a "positioning assistance data provision" message, positioning assistance data that the UE requests, containing the configuration information for SL-PRS1 and SL-PRS2.

Step 310, the LMF receives positioning information reported by a target UE (a Doppler frequency offset and/or oscillator frequency offset and/or relative distance variation).

At a base station or TRP side, a positioning method according to the embodiment includes:

Step 301, a target UE and an anchor UE, having established connections with a service base station or TRP, are in a radio resource control connected (RRC_CONNECTED) state.

Step 305B, the base station or TRP transmits a "positioning assistance data response" message to an LMF, to provide the LMF with requested positioning assistance data, containing the configuration information for SL-PRS1 and SL-PRS2.

Embodiment 2: SL positioning between a UE and a network side (for example, a TRP or RSU).

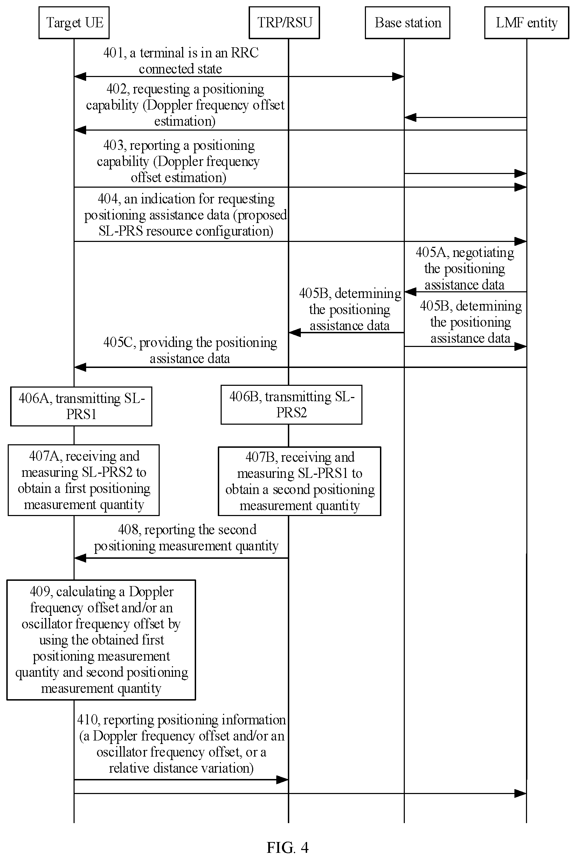

With reference to FIG. 4, in this embodiment, the two ends of a sidelink are a target UE and a network side entity (for example, a TRP or RSU) respectively. The target UE transmits SL-PRS1 (the first positioning reference signal), and the TRP/RSU transmits SL-PRS2 (the second positioning reference signal). A positioning method according to the embodiment includes:

401, a target UE, having established a connection with a service base station, is in a radio resource control connected (RRC_CONNECTED) state.

402, an LMF entity requests, respectively, a positioning capability (a capability for Doppler frequency offset estimation) from the target UE and the base station.

403, the target UE and the base station report positioning capabilities (the capabilities for Doppler frequency offset estimation) to the LMF entity respectively.

404, the target UE transmits, to the LMF entity, an indication for requesting positioning assistance data (carrying SL-PRS resource configuration that the target UE proposes).

405A,. the LMF entity negotiates positioning assistance data with the base station.

405B, the base station determines the positioning assistance data and transmits it, respectively, to the LMF entity and a TRP or RSU.

405C, the LMF entity provides the positioning assistance data to the target UE.

406A, the target UE transmits SL-PRS1 (a first positioning reference signal) to the TRP or RSU.

406B, the TRP or RSU transmits SL-PRS2 (a second positioning reference signal) to the target UE.

407A, the target UE receives and measures SL-PRS2 to obtain a first positioning measurement quantity.

407B, the TRP or RSU receives and measures SL-PRS1 to obtain a second positioning measurement quantity.

408, the TRP or RSU transmits the second positioning measurement quantity to the target UE.

409, the target UE, by using the obtained first positioning measurement quantity and second positioning measurement quantity, calculates positioning information including a Doppler frequency offset and/or an oscillator frequency offset and/or a relative distance variation.

410, the target UE transmits, to the TRP or RSU, and the LMF entity, the positioning information including the Doppler frequency offset and/or the oscillator frequency offset and/or the relative distance variation.

Specifically, at a target UE side, a positioning method in the embodiment includes:

Step 401, a target UE, having established a connection with a service base station, is in a radio resource control connected (RRC_CONNECTED) state.

Step 402, the LMF transmits a "positioning capability request" message (including a capability for Doppler frequency offset estimation) to the target UE, to request the target UE to notify the LMF of a positioning function that the target UE can support. The "positioning capability request" message includes the capabilities that the UE has for Doppler frequency offset/oscillator frequency offset estimation.

Step 403, the target UE transmits, in response to the LMF, a "positioning capability provision" message, the "positioning capability provision" message reporting a positioning capability of the UE, including Doppler frequency offset estimation.

Step 404, the target UE transmits a "positioning assistance data request" message to the LMF. This message includes a request for positioning assistance data for SL-PRS1 and SL-PRS2 from the LMF.

In order to quickly measure relative speed, configuration requirements for an SL-PRS 1 resource are as follows.

Firstly, the time interval between dT1 and dT2 are as short as possible, which is intended to ensure that the oscillator frequency offsets of the target UE and the anchor UE remain roughly unchanged (or a time change value is less than an expected threshold). For example: repeated positioning reference signals can belong to two adjacent OFDM symbols of a same SL-PRS resource; or belong to two different SL-PRS resources configured on adjacent OFDM symbols.

Secondly, during the entire measurement time, there should not be TAC and/or ATA and/or AFA adjustment for the target UE, or the target UE report a TAC/ATA/AFA adjustment value or indication information on whether the current TAC/ATA/AFA is valid, to a network (or an anchor UE of the other end).

Step 405C, the target UE receives the positioning assistance data, including configuration information for SL-PRS1 and SL-PRS2, provided by the LMF through a "positioning assistance data provision" message.

Step 406A, the target UE transmits SL-PRS1 signal to a gNB and/or a TRP and/or RSU.

A pattern of the SL-PRS1 signal includes two options:

Opt. 1: redesigning a non-staggered PRS pattern (namely, with an OFDM symbol as a period).

Opt. 2: reusing the existing staggered PRS pattern + the repetition with a quantity M of OFDM symbols of a PRS resource as granularity, to construct a new PRS pattern.

Considering the need to support high-speed sidelink scenarios, an SL-PRS does not support 12 OFDM symbols, instead, adds supporting for 1 OFDM symbol, namely, M=1, 2, 4, or 6, and supports N>M, thereby to support distinguishing SL-PRS signals from multiple TRPs/RSUs using different RE shifts under a given Comb-size N.

It should be noted that, compared to that a DL PRS resource in a 5G NR Uu interface has a repetition period with a slot as basic granularity, the repetition granularity of an SL-PRS resource in the embodiments is based on an OFDM symbol level or an SL-PRS resource, with application scenarios including Sidelink and Uu interface RedCap.

Step 407A, the target UE receives and measures SL-PRS2 from the TRP or RSU, to obtain a first positioning measurement quantity.

The first positioning measurement quantity includes two options:

Opt 1: carrier phase (POA) values $\varphi_a^i(T_{21})$, and $\varphi_a^i(T_{22})$ at $T_{21}$ and $T_{22}$ time instants (the unit is radian or meter), and the corresponding measurement time instants $T_{21}$ and $T_{22}$ (the unit is OFDM symbol or second);

or, a POA variation from the $T_{21}$ time instant to the $T_{22}$ time instant: $d_{Phi2} = \varphi_a^i(T_{22}) - \varphi_a^i(T_{21})$ (the unit is radian or meter), and a corresponding time interval dT2 (the unit is OFDM symbol or second).

Opt. 2: a relative speed or Doppler frequency offset f_dop (unit: Hz) of the TRP or RSU in relation to the target UE, a cumulative sum of oscillator frequency offsets f_osc (unit: Hz) of the TRP or RSU and the target UE, and a change rate of the cumulative sum of the oscillator frequency offsets d_f_osc (unit: Hz) of the TRP or RSU and the target UE.

Step 408, the target UE receives a second positioning measurement quantity reported by the TRP or RSU.

The second positioning measurement quantity includes two options:

Opt. 1: carrier phase (POA) values $\varphi_a^i(T_{11})$ and $\varphi_a^i(T_{12})$, (the unit is radian or meter) at $T_{11}$ and $T_{12}$ time instants, and the corresponding measurement time instants $T_{11}$ and $T_{12}$ (the unit is OFDM symbol or second);

or a POA variation from a $T_{11}$ time instant to a $T_{12}$ time instant: $d_{Phi1} = \varphi_a^i(T_{12}) - \varphi_a^i(T_{11})$ (the unit is radian or meter), and a corresponding time interval dT1 (the unit is OFDM symbol or second).

Opt. 2: a relative speed or Doppler frequency offset f_dop (unit: Hz) of the target UE in relation to the TRP or RSU, a cumulative sum of oscillator frequency offsets f_osc (unit: Hz) of the target UE and the TRP or RSU, and a change rate of the cumulative sum of the oscillator frequency offsets d_f_osc (unit: Hz) of the target UE and the TRP or RSU.

In some implementations, the TRP or RSU, when transmitting a positioning measurement quantity, indicates the number of OFDM symbols used to calculate the measurement quantity, and whether averaging processing is used. For example, averaging processing is performed on M=4 OFDM symbols, namely, the TRP or RSU first performs averaging on received signals of the 4 OFDM symbols and then calculates the measurement quantities.

Step 409, the target UE, by using the first positioning measurement quantity obtained by itself and the second positioning measurement quantity reported by the TRP or RSU, calculates a Doppler frequency offset and/or an oscillator frequency offset.

The calculation methods for Doppler frequency offset and oscillator frequency offset is as follows: the target UE, having obtained the positioning measurement quantity according to Opt. 1 of Step 407A and Step 407, can measure, based on the phase changes during dT1 and dT2 time intervals, to obtain the first positioning measurement quantity according to Opt. 2, including: a UE relative speed or Doppler frequency offset, an oscillator frequency offset, and a change rate of the oscillator frequency offset.

$$\varphi_a^i(T_{12}) - \varphi_a^i(T_{11}) = d_{Phi1} = (f\_dop\_i + f\_osc) * dT1 \qquad (10)$$

$$\varphi_a^i(T_{22}) - \varphi_a^i(T_{21}) = d_{Phi2} = (-f\_dop\_i + f\_osc) * dT2 \qquad (11)$$

where f_dop_i represents the Doppler frequency offset, f_osc represents the oscillator frequency offset, and $\varphi_a^i(T_{11})$, $\varphi_a^i(T_{12})$, $\varphi_a^i(T_{21})$, and $\varphi_a^i(T_{22})$ (the unit is radian or meter) represent, respectively, carrier phase (POA) values at $T_{11}$, $T_{12}$, $T_{21}$ and $T_{22}$ time instants; $d_{Phi1} = \varphi_a^i(T_{12}) - \varphi_a^i(T_{11})$ represents a POA variation (the unit is radian or meter) from the $T_{11}$ time instant to the $T_{12}$ time instant; $d_{Phi2} = \varphi_a^i(T_{22}) - \varphi_a^i(T_{21})$ represents a POA variation (the unit is radian or meter) from the $T_{21}$ time instant to the $T_{22}$ time instant; dT1 = $T_{12}$ - $T_{11}$ represents a repetition time interval of an SL-PRS 1 resource; and dT2 = $T_{22}$ - $T_{21}$ represents a repetition time interval of an SL-PRS2 resource.

With the above two simultaneous equations (10) and (11), we can obtain:

$$f\_dop\_i = (d_{Phi1}/dT1 - d_{Phi2}/dT2)/2; \qquad (12)$$

$$f\_osc = (d_{Phi1}/dtT1 + d_{Phi2}/dT2)/2; \qquad (13)$$

where f_osc = f_osc_UE1 + f_osc_UE2, which includes a cumulative sum of oscillator frequency offsets of the target UE and the TRP or RSU. The role of estimating f_osc separately is that, if f_osc can be accurately estimated, its effect can be eliminated in subsequent fast measurement (for example, using traditional SL-RTT). If it changes linearly in a certain period, a change rate of the oscillator frequency offset can be calculated for compensation in advance.

A method for calculating the change rate of the oscillator frequency offset is as follows: assuming that the oscillator frequency offset has a linear change rate, for example, being approximately constant between the T1 time instant and the T2 time instant, approximately constant between the T3 time instant and the T4 time instant, and changing linearly from the T2 time instant to the T3 time instant. Then a calculation formula for a linear change rate of the oscillator frequency offset is as follows: d_f_osc = (f_osc(T3) - f_osc(T2)) / (T3 - T2).

Step 410, the target UE reports, to the TRP or RSU, and the LMF, the positioning information, including the Doppler frequency offset and/or oscillator frequency offset and/or relative distance variation.

For example: the relative distance variation d_relative1 = v * D1 = f_dop_i * lamda * D1;
or,

$$d\_relative2 = -v * T2 = -f\_dop\_i * lamda * D2.$$

where D1 and D2 represent, respectively, positioning measurement time of the target UE, and positioning measurement time of the TRP or RSU, which are both preset values, and lamda represents a carrier wavelength.

If the oscillator frequency offset has a regular change rate (for example, linear change), prediction in advance based on historical values and a change rule, and linear weighting based on measurement quantities can be performed. For example, a linear change rate of the oscillator frequency offset at the T3 time instant predicted based on the T2 time instant:

$$d\_f\_osc\_pre = (f\_osc(T3) - f\_osc(T2)) / (T3-T2)$$

At the T3 time instant, the actually measured oscillator frequency offset according to equation (13) is f_osc_meas(T3). Linear weighting processing can be applied based on the following equation, as shown in equation (14).

f_osc(T3) = Factor * f_osc_meas(T3) + (1 - Factor) * [f_osc_meas(T2) + d_f_osc_pre --> * (T3 - T2)]        (14)

At a TRP or RSU side, a positioning method according to the embodiment includes:
Step 405B, a TRP or RSU receives a "positioning assistance data response" message transmitted by a base station or LMF, including downlink PRS configuration data.

Step 406B, the TRP or RSU transmits an SL-PRS2 signal to a target UE.

Two options included in a pattern of the SL-PRS2 signal are the same as that of the SL-PRS1 signal in step 406A.

Step 407B, the TRP or RSU receives and measures the SL-PRS1 from the target UE to obtain the second positioning measurement quantity.

The second positioning measurement quantity includes two options:

Opt. 1: carrier phase (POA) values $\varphi_a^i(T_{11})$ and $\varphi_a^i(T_{12})$ (the unit is radian or meter) at $T_{11}$ and $T_{12}$ time instants, and the corresponding measurement time instants $T_{11}$ and $T_{12}$ (the unit is OFDM symbol or second);

or a POA variation from a $T_{11}$ time instant to a $T_{12}$ time instant: $d_{Phi1} = \varphi_a^i(T_{12}) - \varphi_a^i(T_{11})$ (the unit is radian or meter), and a corresponding time interval dT1 (the unit is OFDM symbol or second).

Opt. 2: a relative speed or Doppler frequency offset f_dop (unit: Hz) of the target UE in relation to the TRP or RSU, an oscillator frequency offset f_osc (unit: Hz) of the target UE, and a change rate of the oscillator frequency offset d_f_osc (unit: Hz) of the target UE.

In some implementations, the TRP or RSU, when reporting a positioning measurement quantity, indicates the number of OFDM symbols used to calculate the measurement quantity, and whether averaging processing is used. For example, averaging processing is performed on M=4 OFDM symbols, namely, the TRP or RSU first performs averaging on received signals of the 4 OFDM symbols and then calculates the measurement quantities.

Step 408, the TRP or RSU reports a second positioning measurement quantity to the target UE.

Step 410, the TRP or RSU receives positioning information reported by the target UE, including a Doppler frequency offset and/or oscillator frequency offset and/or relative distance variation.

For example: the relative distance variation d_relative1 = v * D1 = f_dop_i * lamda * D1;

or,

$$d\_relative2 = -v * T2 = -f\_dop\_i * lamda * D2.$$

where D1 and D2 represent, respectively, positioning measurement time of the target UE, and positioning measurement time of the TRP or RSU, which are both preset values, and lamda represents a carrier wavelength.

If the oscillator frequency offset has a regular change rate (for example, linear change), prediction in advance based on historical values and a change rule, and linear weighting based on measurement quantities can be performed. For example, a linear change rate of the oscillator frequency offset at the T3 time instant predicted based on the T2 time instant:

$$d\_f\_osc\_pre = (f\_osc(T3) - f\_osc(T2)) / (T3-T2)$$

At the T3 time instant, the actually measured oscillator frequency offset according to equation (13) is f_osc_meas(T3). Linear weighting processing can be applied based on the following equation, as shown in equation (15).

f_osc(T3) = Factor * f_osc_meas(T3) + (1 - Factor) * [f_osc_meas(T2) + d_f_osc_pre * (T3 - T2)]    (15)

At an LMF entity side, a positioning method according to the embodiment includes:
Step 405A, an LMF transmits a "positioning assistance data negotiation" message to a base station, this message requesting that the base station provide positioning assistance data, for example, PRS configuration data.

Step 405B, the LMF receives a "positioning assistance data response" message transmitted by the base station, including downlink PRS configuration data.

Step 405C, the LMF provides, in a "positioning assistance data provision" message, positioning assistance data that the UE requests, containing the configuration information for SL-PRS1 and SL-PRS2.

Step 410, the LMF receives positioning information reported by a target UE (including a Doppler frequency offset and/or oscillator frequency offset and/or relative distance variation).

For example: the relative distance variation d_relative1 = v * D1 = f_dop_i * lamda * D1;
or,

$$d\_relative2 = -v * T2 = -f\_dop\_i * lamda * D2.$$

where D1 and D2 represent, respectively, positioning measurement time of the target UE, and positioning measurement time of the TRP or RSU, which are both preset values, and lamda represents a carrier wavelength.

If the oscillator frequency offset has a regular change rate (for example, linear change), prediction in advance based on historical values and a change rule, and linear weighting based on measurement quantities can be performed. For example, a linear change rate of the oscillator frequency offset at the T3 time instant predicted based on the T2 time instant:

$$d\_f\_osc\_pre = (f\_osc(T3) - f\_osc(T2)) / (T3-T2)$$

At the T3 time instant, the actually measured oscillator frequency offset according to equation (13) is f_osc_meas(T3). Linear weighting processing can be applied based on the following equation, as shown in equation (16).

f_osc(T3) = Factor * f_osc_meas(T3) + (1 - Factor) * [f_osc_meas(T2) + d_f_osc_pre * (T3 - T2)]    (16)

At a base station side, a positioning method according to the embodiment includes:
Step 401, a target UE, having established a connection with a service base station, is in an RRC_CONNECTED state.

Step 405B, the base station transmits a "positioning assistance data response" message to an LMF and a TRP or RSU, to provide the LMF with requested downlink positioning assistance data, including downlink PRS configuration data.

In summary, the embodiments of the present application provide a method for performing fast relative positioning based on bidirectional carrier phase measurement quantities in a sidelink, solving the following two problems.

First, measurement accuracy of TOA and AOA is not high. The TOA is limited by a signal bandwidth, and the AOA is limited by the quantity of receiving antennas.

In contrast, in the solutions according to the embodiments of the present application, measurement accuracy of carrier phase POA is high, which mainly depends on a carrier frequency point but is not limited by a signal bandwidth or the quantity of receiving antennas.

Second, there is a significant latency.

In contrast, in the solutions according to the embodiments of the present application, since the measurement accuracy of carrier phase POA is much higher than the measurement accuracy of TOA, as long as a UE moves by a relatively short distance (for example, a few carrier wavelengths), a UE relative position variation can be obtained based on a POA measurement quantity, thereby reducing the latency.

The technical solutions according to the embodiments of the present application are summarized as follows.

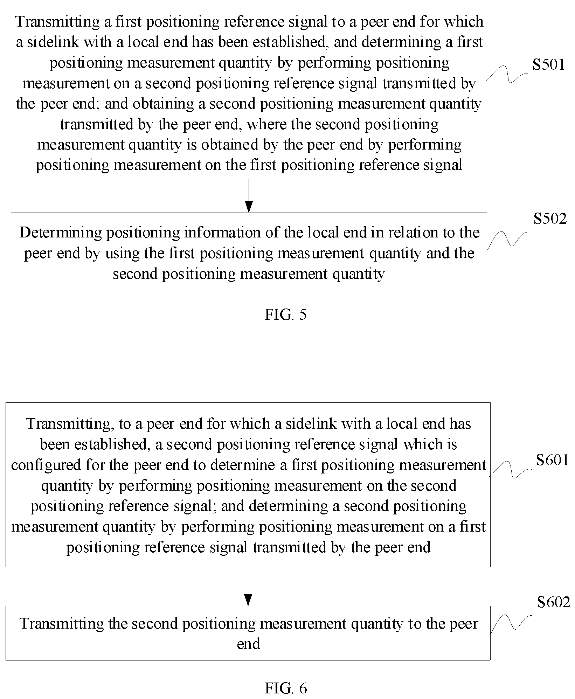

At one end of a sidelink, which, for example, may be a UE, a gNB, a TRP, an RSU or the like, with reference to FIG. 5, a positioning method according to an embodiment of the present application includes:

S501, transmitting a first positioning reference signal (namely, the foregoing SL-PRS 1) to a peer end for which a sidelink with a local end has been established, and determining a first positioning measurement quantity by performing positioning measurement on a second positioning reference signal (namely, the foregoing SL-PRS2) transmitted by the peer end; and obtaining a second positioning measurement quantity transmitted by the peer end, where the second positioning measurement quantity is obtained by the peer end by performing positioning measurement on the first positioning reference signal; and

S502, determining positioning information by using the first positioning measurement quantity and the second positioning measurement quantity.

In some implementations, the first positioning reference signal is transmitted using one of the following two patterns:

a non-staggered positioning reference signal pattern, in which transmission of a positioning reference signal is repeated with an OFDM symbol as granularity, thereby, improving the positioning accuracy and efficiency for high-speed UE positioning; and

a staggered positioning reference signal pattern, in which transmission of a positioning reference signal is repeated with M OFDM symbols as granularity, where M represents a number of OFDM symbols occupied by a positioning reference signal resource in time domain, and M is a positive integer greater than or equal to 1 and less than 14.

In some implementations, the first positioning measurement quantity includes one or a combination of the following two types of positioning measurement quantities:

a first type of positioning measurement quantity, where the first type of positioning measurement quantity includes one or a combination of the following measurement quantities:

phase of arrival POA values $\varphi_a^i(T_{21})$ and $\varphi_a^i(T_{22})$ at $T_{21}$ and $T_{22}$ time instants, and the corresponding measurement time instants $T_{21}$ and $T_{22}$; where the $T_{21}$ and $T_{22}$ time instants are time instants when the peer end transmits two consecutive repeated positioning reference signals; and

a POA variation from the $T_{21}$ time instant to the $T_{22}$ time instant: $d_{Phi2} = \varphi_a^i(T_{22}) - \varphi_a^i(T_{21})$, and a time interval $dT2$ from the $T_{21}$ time instant to the $T_{22}$ time instant;

a second type of positioning measurement quantity, where the second type of positioning measurement quantity includes one or a combination of the following measurement quantities:

a relative speed or a Doppler frequency offset of the peer end in relation to the local end;

a cumulative sum of oscillator frequency offsets of the peer end and the local end; and

a change rate of the cumulative sum of the oscillator frequency offsets of the peer end and the local end.

Thus, in the embodiments of the present application, based on bidirectional carrier phase difference measurement quantities at different time instants, positioning information of the target UE relative to the anchor UE can be measured fast.

In some implementation, the second positioning measurement quantity includes one or a combination of the following two types of positioning measurement quantities:

a first type of positioning measurement quantity, where the first type of positioning measurement quantity includes one or a combination of the following measurement quantities:

phase of arrival POA values $\varphi_a^i(T_{11})$ and $\varphi_a^i(T_{12})$ at $T_{11}$ and $T_{12}$ time instants, and the corresponding

measurement time instants $T_{11}$ and $T_{12}$; the $T_{11}$ and $T_{12}$ time instants are time instants when the local end transmits two consecutive repeated positioning reference signals; and

a POA variation from a $T_{11}$ time instant to a $T_{12}$ time instant: $d_{Phi1} = \varphi_a^i(T_{12}) - \varphi_a^i(T_{11})$, and a time interval dT1 from the $T_{11}$ time instant to the $T_{12}$ time instant;

a second type of positioning measurement quantity, where the second type of positioning measurement quantity includes one or a combination of the following measurement quantities:

a relative speed or a Doppler frequency offset of the local end in relation to the peer end;
a cumulative sum of oscillator frequency offsets of the local end and the peer end; and
a change rate of the cumulative sum of the oscillator frequency offsets of the local end and the peer end.

In some implementations, the positioning information includes a Doppler frequency offset determined through the following manner:

using a first ratio of a phase of arrival variation from a $T_{11}$ time instant to a $T_{12}$ time instant to a repetition time interval $T_{12}$ - $T_{11}$ of a first positioning reference signal resource;
determining a second ratio of a phase of arrival variation from a $T_{21}$ time instant to a $T_{22}$ time instant to a repetition time interval $T_{22}$ - $T_{21}$ of a second positioning reference signal resource; and
determining the Doppler frequency offset to be half of a difference between the first ratio and the second ratio;
where the $T_{11}$ and $T_{12}$ time instants are time instants when the local end transmits two consecutive repeated positioning reference signals;
and where the $T_{21}$ and $T_{22}$ time instants are time instants when the peer end transmits two consecutive repeated positioning reference signals.

In some implementations, the positioning information includes an oscillator frequency offset determined through the following manner:

using a first ratio of a phase of arrival variation from a $T_{11}$ time instant to a $T_{12}$ time instant to a repetition time interval $T_{12}$ - $T_{11}$ of a first positioning reference signal resource;
determining a second ratio of a phase of arrival variation from a $T_{21}$ time instant to a $T_{22}$ time instant to a repetition time interval $T_{22}$ - $T_{21}$ of a second positioning reference signal resource; and
determining the oscillator frequency offset to be half of a sum of the first ratio and the second ratio;
where the $T_{11}$ and $T_{12}$ time instants are time instants when the local end transmits two consecutive repeated positioning reference signals;
and where the $T_{21}$ and $T_{22}$ time instants are time instants when the peer end transmits two consecutive repeated positioning reference signals.

In some implementations, the positioning information further includes a change rate of the oscillator frequency offset.
In some implementations, the positioning information further includes a relative distance variation determined through the following manner:

determining a product of the Doppler frequency offset, a preset carrier wavelength, and first measurement time to be a relative distance variation of the local end in relation to the peer end; and/or,
determining a product of the Doppler frequency offset, the preset carrier wavelength, and second measurement time to be a relative distance variation of the peer end in relation to the local end;
where the first measurement time is preset positioning measurement time of the local end; and
where the second measurement time is preset positioning measurement time of the peer end.

In some implementations, the method further includes:
transmitting the positioning information to the peer end and/or a positioning management function entity.
In some implementations, the method further includes:

transmitting whether the local end has a positioning capability for determining the positioning information,
where the whether the local end has the positioning the capability for determining the positioning information can be proactively transmitted, or can be transmitted based on a request from a peer end UE, an LMF and/or a base station.

The positioning capability can be transmitted to the peer UE, or it can be transmitted to the LMF and/or a base station.

The positioning capability, for example:

whether it has a capability for Doppler frequency offset and/or oscillator frequency offset estimation;
whether it has a capability for determination of carrier phase difference measurement quantities.

In some implementations, the method further includes:
obtaining positioning assistance data, where the positioning assistance data includes resource configuration information of the first positioning reference signal.

The positioning assistance data can be proactively transmitted by the network side, or the network side can transmit the positioning assistance data in response to a request to the network side.

In some implementations, the resource configuration information of the first positioning reference signal includes:

an OFDM symbol for transmitting a positioning reference signal at a $T_{11}$ time instant being adjacent to an OFDM symbol for transmitting a positioning reference signal at a $T_{12}$ time instant; or, an OFDM symbol for transmitting a positioning reference signal at a $T_{11}$ time instant and an OFDM symbol for transmitting a positioning reference signal at a $T_{12}$ time instant being two different positioning reference signal resources configured on adjacent OFDM symbols; where the $T_{11}$ time instant and the $T_{12}$ time instant are two adjacent time instants for transmitting positioning reference signals;
and/or,
during positioning measurement time, the local end being disabled of performing timing and/or frequency adjustment; or, the local end, in case of timing and/or frequency adjustment, needing to transmit, to a network side and/or the peer end, a timing and/or frequency adjustment value or indication information on whether the current timing and/or frequency adjustment is valid.

At the other end of a sidelink, which, for example, can be a UE, a gNB, a TRP, an RSU or the like, with reference to FIG. 6, a positioning method according to an embodiment of the present application includes:

S601, transmitting, to a peer end for which a sidelink with a local end has been established, a second positioning reference signal which is configured for the peer end to determine a first positioning measurement quantity by performing positioning measurement on the second positioning reference signal; and determining a second positioning measurement quantity by performing positioning measurement on a first positioning reference signal transmitted by the peer end; and
S602, transmitting the second positioning measurement quantity to the peer end.

In some implementations, the method further includes:
receiving positioning information transmitted by the peer end, where the positioning information is positioning information of the peer end in relation to the local end which is determined by the peer end using the first positioning measurement quantity and the second positioning measurement quantity.

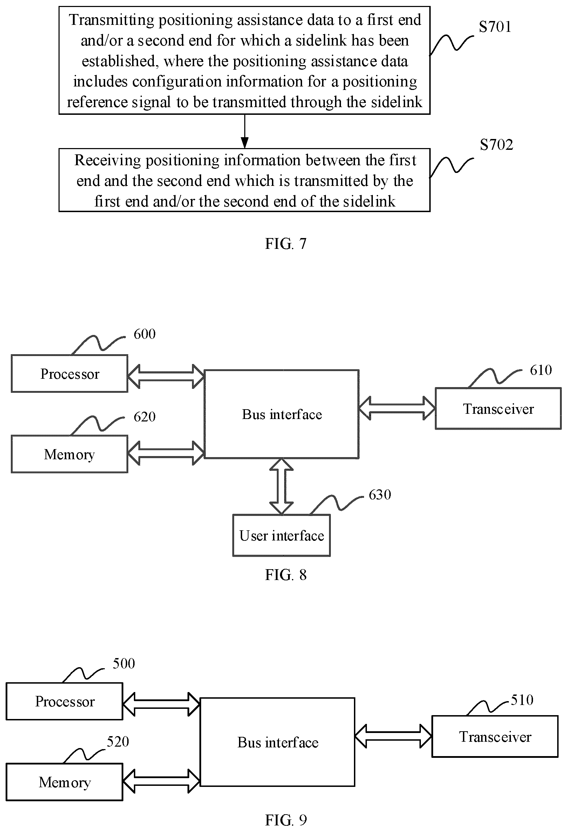

At an LMF entity side, with reference to FIG. 7, a positioning method according to an embodiment of the present application includes:

S701, transmitting positioning assistance data to a first end and/or a second end for which a sidelink has been established, where the positioning assistance data includes configuration information for a positioning reference signal to be transmitted through the sidelink;
S702, receiving positioning information between the first end and the second end which is transmitted by the first end and/or the second end of the sidelink.

In some implementations, the configuration information includes:

an OFDM symbol for transmitting a positioning reference signal at a $T_{11}$ time instant being adjacent to an OFDM symbol for transmitting a positioning reference signal at a $T_{12}$ time instant; or, an OFDM symbol for transmitting a positioning reference signal at a $T_{11}$ time instant and an OFDM symbol for transmitting a positioning reference signal at a $T_{12}$ time instant being two different positioning reference signal resources configured on adjacent OFDM symbols;

where the $T_{11}$ time instant and the $T_{12}$ time instant are two adjacent time instants for transmitting positioning reference signals;
and/or,
during positioning measurement time, the first end and/or the second end of the sidelink being disabled of performing timing and/or frequency adjustment; or, the first end and/or the second end of the sidelink, in case of timing and/or frequency adjustment, needing to report a timing and/or frequency adjustment value or indication information on whether the current timing and/or frequency adjustment is valid.

Based on the same inventive concept, the following introduces a device or apparatus provided in the embodiments of the present application. Explanations or illustrative description for the same or the corresponding technical features as described in the foregoing methods, will not be repeated in the following.

At one end of a sidelink, a positioning apparatus according to an embodiment of the present application, which, for example, can be a UE, a gNB, a TRP, an RSU or the like, includes a memory, a transceiver and a processor;
the processor 620 is configured to store a computer program; the transceiver 610 is configured to receive or transmit data under control of the processor; the processor 600 is configured to read the computer program in the memory 620 and perform the following operations:

transmitting a first positioning reference signal to a peer end for which a sidelink with a local end has been established, and determining a first positioning measurement quantity by performing positioning measurement on a second positioning reference signal transmitted by the peer end; and obtaining a second positioning measurement quantity transmitted by the peer end, where the second positioning measurement quantity is obtained by the peer end by performing positioning measurement on the first positioning reference signal; and
determining positioning information by using the first positioning measurement quantity and the second positioning measurement quantity.

In some implementations, the first positioning reference signal is transmitted using one of the following two patterns:

a non-staggered positioning reference signal pattern, in which transmission of a positioning reference signal is repeated with an OFDM symbol as granularity; and
a staggered positioning reference signal pattern, in which transmission of a positioning reference signal is repeated with M OFDM symbols as granularity, where M represents a number of OFDM symbols occupied by a positioning reference signal resource in time domain, and M is a positive integer greater than or equal to 1 and less than 14.

In some implementations, the first positioning measurement quantity includes one or a combination of the following two types of positioning measurement quantities:
a first type of positioning measurement quantity, where the first type of positioning measurement quantity includes one or a combination of the following measurement quantities:

phase of arrival POA values $\varphi_a^i(T_{21})$ and $\varphi_a^i(T_{22})$ at $T_{21}$ and $T_{22}$ time instants, and the corresponding measurement time instants $T_{21}$ and $T_{22}$; where the $T_{21}$ and $T_{22}$ time instants are time instants when the peer end transmits two consecutive repeated positioning reference signals; and

a POA variation from the $T_{21}$ time instant to the $T_{22}$ time instant: $d_{Phi2}$ = $\varphi_a^i(T_{22}) - \varphi_a^i(T_{21})$, and a time interval $dT2$ from the $T_{21}$ time instant to the $T_{22}$ time instant;
a second type of positioning measurement quantity, where the second type of positioning measurement quantity includes one or a combination of the following measurement quantities:

a relative speed or a Doppler frequency offset of the peer end in relation to the local end;
a cumulative sum of oscillator frequency offsets of the peer end and the local end; and
a change rate of the cumulative sum of the oscillator frequency offsets of the peer end and the local end.

In some implementations, the second positioning measurement quantity includes one or a combination of the following two types of positioning measurement quantities:
a first type of positioning measurement quantity, where the first type of positioning measurement quantity includes one or a combination of the following measurement quantities:

phase of arrival POA values $\varphi_a^i(T_{11})$ and $\varphi_a^i(T_{12})$ at $T_{11}$ and $T_{12}$ time instants, and the corresponding measurement time instants $T_{11}$ and $T_{12}$; the $T_{11}$ and $T_{12}$ time instants are time instants when the local end transmits two consecutive repeated positioning reference signals; and

a POA variation from a $T_{11}$ time instant to a $T_{12}$ time instant: $d_{Phi1} = \varphi_a^i(T_{12}) - \varphi_a^i(T_{11})$, and a time interval dT1 from the $T_{11}$ time instant to the $T_{12}$ time instant;
a second type of positioning measurement quantity, where the second type of positioning measurement quantity includes one or a combination of the following measurement quantities:

a relative speed or a Doppler frequency offset of the local end in relation to the peer end;
a cumulative sum of oscillator frequency offsets of the local end and the peer end; and
a change rate of the cumulative sum of the oscillator frequency offsets of the local end and the peer end.

In some implementations, the positioning information includes a Doppler frequency offset determined through the following manner:

using a first ratio of a phase of arrival variation from a $T_{11}$ time instant to a $T_{12}$ time instant to a repetition time interval $T_{12}$ - $T_{11}$ of a first positioning reference signal resource;
determining a second ratio of a phase of arrival variation from a $T_{21}$ time instant to a $T_{22}$ time instant to a repetition time interval $T_{22}$ - $T_{21}$ of a second positioning reference signal resource; and
determining the Doppler frequency offset to be half of a difference between the first ratio and the second ratio;
where the $T_{11}$ and $T_{12}$ time instants are time instants when the local end transmits two consecutive repeated positioning reference signals;
and where the $T_{21}$ and $T_{22}$ time instants are time instants when the peer end transmits two consecutive repeated positioning reference signals.

**In** some implementations, the positioning information includes an oscillator frequency offset determined through the following manner:

using a first ratio of a phase of arrival variation from a $T_{11}$ time instant to $T_{12}$ time instant to a repetition time interval $T_{12}$ - $T_{11}$ of a first positioning reference signal resource;
determining a second ratio of a phase of arrival variation from a $T_{21}$ time instant to $T_{22}$ time instant to a repetition time interval $T_{22}$ - $T_{21}$ of a second positioning reference signal resource; and
determining the oscillator frequency offset to be half of a sum of the first ratio and the second ratio;
where the $T_{11}$ and $T_{12}$ time instants are time instants when the local end transmits two consecutive repeated positioning reference signals;
and where the $T_{21}$ and $T_{22}$ time instants are time instants when the peer end transmits two consecutive repeated positioning reference signals.

In some implementations, the positioning information further includes a change rate of the oscillator frequency offset.
In some implementations, the positioning information further includes a relative distance variation determined through the following manner:

determining a product of the Doppler frequency offset, a preset carrier wavelength, and first measurement time to be a relative distance variation of the local end in relation to the peer end; and/or,
determining a product of the Doppler frequency offset, the preset carrier wavelength, and second measurement time to be a relative distance variation of the peer end in relation to the local end;
where the first measurement time is preset positioning measurement time of the local end; and
where the second measurement time is preset positioning measurement time of the peer end.

In some implementations, the processor 600 is further configured to read the computer program in the memory 620 and perform the following operation:
transmitting the positioning information to the peer end and/or a positioning management function entity.
In some implementations, the processor 600 is further configured to read the computer program in the memory 620 and perform the following operation:
transmitting whether the local end has a positioning capability for determining the positioning information.

In some implementations, the processor 600 is further configured to read the computer program in the memory 620 and perform the following operation:

obtaining positioning assistance data, where the positioning assistance data includes resource configuration information of the first positioning reference signal.

In some implementations, the resource configuration information of the first positioning reference signal includes:

an OFDM symbol for transmitting a positioning reference signal at a $T_{11}$ time instant being adjacent to an OFDM symbol for transmitting a positioning reference signal at a $T_{12}$ time instant; or, an OFDM symbol for transmitting a positioning reference signal at a $T_{11}$ time instant and an OFDM symbol for transmitting a positioning reference signal at a $T_{12}$ time instant being two different positioning reference signal resources configured on adjacent OFDM symbols; where the $T_{11}$ time instant and the $T_{12}$ time instant are two adjacent time instants for transmitting positioning reference signals;

and/or,

during positioning measurement time, the local end being disabled of performing timing and/or frequency adjustment; or, the local end, in case of timing and/or frequency adjustment, needing to transmit, to a network side and/or the peer end, a timing and/or frequency adjustment value or indication information on whether the current timing and/or frequency adjustment is valid.

At the other end of the sidelink, a positioning apparatus according to an embodiment of the present application, where reference can be made to FIG. 8 for the structure thereof, includes a memory, a transceiver and a processor; where the memory is configured to store a computer program; the transceiver is configured to receive or transmit data under control of the processor; the processor is configured to read the computer program in the memory and perform the following operations:

transmitting, to a peer end for which a sidelink with a local end has been established, a second positioning reference signal which is configured for the peer end to determine a first positioning measurement quantity by performing positioning measurement on the second positioning reference signal; and determining a second positioning measurement quantity by performing positioning measurement on a first positioning reference signal transmitted by the peer end; and

transmitting the second positioning measurement quantity to the peer end.

In some implementations, the processor is further configured to read the computer program in the memory and perform the following operation:

receiving positioning information transmitted by the peer end, where the positioning information is positioning information of the peer end in relation to the local end which is determined by the peer end using the first positioning measurement quantity and the second positioning measurement quantity.

It should be noted that, if any end of the sidelink is a terminal side apparatus, then there will be a user interface 630 as shown in FIG. 8. For different user equipment, the user interface 630 can also be an interface capable of externally or internally connecting a necessary device, such connected device including but not limited to a keypad, a display, a speaker, a microphone, a joystick, etc. If any end of the sidelink is a network side apparatus, then the user interface 630 as shown in FIG. 8 may be omitted, and the structure of the network side apparatus can be as shown in FIG. 9.

With reference to FIG. 8, a bus architecture can include any quantity of interconnected buses and bridges which specifically links together various circuits of one or more processors represented by the processor 600 and memories represented by the memory 620. The bus architecture can also link various other circuits such as a peripheral device, a voltage regulator, a power management circuit or the like, which are well known in the field and thus are not further described herein. The bus interface provides the interface. The transceiver 610 can be multiple components, namely, includes a transmitter and a receiver, providing units for communicating with various other devices on transmission media, which include a transmission medium such as a wireless channel, a wired channel, an optical cable or the like.

The processor 600 is responsible for managing the bus architecture and general processing, and the memory 620 can store data used by the processor 600 in an operation.

In some implementations, the processor 600 can be a CPU (central processing unit), an ASIC (application specific integrated circuit, application specific integrated circuit), an FPGA (field programmable gate array, field programmable gate array), or a CPLD (complex programmable logic device, complex programmable logic device), and the processor can also adopt multi-core architecture.

The processor is configured to, by calling a computer program stored in the memory, implement, according to an obtained executable instruction, any method described according to the embodiments of the present application. The processor and the memory can also be arranged physically separated.

It should be noted that the aforementioned apparatus according to the embodiments of the present application can implement all of the method steps implemented in the foregoing method embodiments, and achieve a same technical effect. Same contents and beneficial effects of this embodiment as those of the method embodiments will not be specifically elaborated here.

At an LMF side, with reference to FIG. 9, a positioning apparatus according to an embodiment of the present application includes a memory 520, a transceiver 510 and a processor 500;

the processor 520 is configured to store a computer program; the transceiver 510 is configured to receive or transmit data under control of the processor 500; the processor 500 is configured to read the computer program in the memory 520 and perform the following operations:

transmitting positioning assistance data to a first end and/or a second end for which a sidelink has been established, where the positioning assistance data includes configuration information for a positioning reference signal to be transmitted through the sidelink;

receiving relative positioning information between the first end and the second end which is transmitted by the first end and/or the second end of the sidelink.

In some implementations, the configuration information includes:

an OFDM symbol for transmitting a positioning reference signal at a $T_{11}$ time instant being adjacent to an OFDM symbol for transmitting a positioning reference signal at a $T_{12}$ time instant; or, an OFDM symbol for transmitting a positioning reference signal at a $T_{11}$ time instant and an OFDM symbol for transmitting a positioning reference signal at a $T_{12}$ time instant being two different positioning reference signal resources configured on adjacent OFDM symbols; where the $T_{11}$ time instant and the $T_{12}$ time instant are two adjacent time instants for transmitting positioning reference signals;

and/or,

during positioning measurement time, the first end and/or the second end of the sidelink being disabled of performing timing and/or frequency adjustment; or, the first end and/or the second end of the sidelink, in case of timing and/or frequency adjustment, needing to report a timing and/or frequency adjustment value or indication information on whether the current timing and/or frequency adjustment is valid.

In FIG. 9, a bus architecture can include any number of interconnected buses and bridges, linking various circuits of one or multiple processors represented by the processor 500 and memories represented by the memory 520. The bus architecture can also link various other circuits such as a peripheral device, a voltage regulator, a power management circuit or the like, which are well known in the field and thus are not further described herein. The bus interface provides the interface. The transceiver 510 can be multiple components, namely, includes a transmitter and a receiver, providing units for communicating with various other devices on transmission media, which include a transmission medium such as a wireless channel, a wired channel, an optical cable or the like. The processor 500 is responsible for managing the bus architecture and general processing, and the memory 520 can store data used by the processor 500 in an operation.

The processor 500 can be a central processing unit (CPU), an application specific integrated circuit (application specific integrated circuit, ASIC), a field programmable gate array (field programmable gate array, FPGA), or a complex programmable logic device (complex programmable logic device, CPLD). The processor can also adopt multi-core architecture.

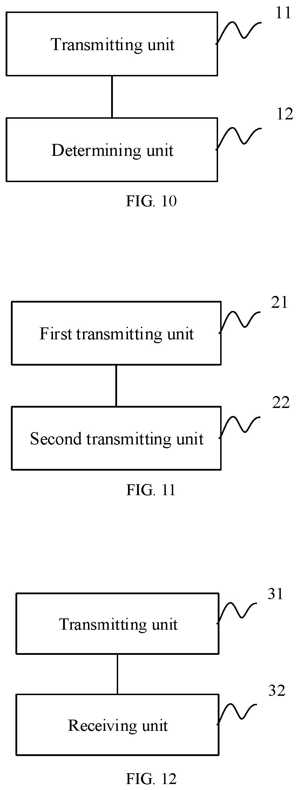

At one end of a sidelink, with reference to FIG. 10, another positioning apparatus according to an embodiment of the present application includes:

a transmitting unit 11, configured to transmit a first positioning reference signal to a peer end for which a sidelink with a local end has been established, and determine a first positioning measurement quantity by performing positioning measurement on a second positioning reference signal transmitted by the peer end; and obtain a second positioning measurement quantity transmitted by the peer end, where the second positioning measurement quantity is obtained by the peer end by performing positioning measurement on the first positioning reference signal; and

a determining unit 12, configured to determine positioning information by using the first positioning measurement quantity and the second positioning measurement quantity.

In some implementations, the first positioning reference signal is transmitted using one of the following two patterns:

a non-staggered positioning reference signal pattern, in which transmission of a positioning reference signal is repeated with an OFDM symbol as granularity; and

a staggered positioning reference signal pattern, in which transmission of a positioning reference signal is repeated with M OFDM symbols as granularity, where M represents a number of OFDM symbols occupied by a positioning reference signal resource in time domain, and M is a positive integer greater than or equal to 1 and less than 14.

In some implementations, the first positioning measurement quantity includes one or a combination of the following two types of positioning measurement quantities:
a first type of positioning measurement quantity, where the first type of positioning measurement quantity includes one or a combination of the following measurement quantities:

phase of arrival POA values $\varphi_a^i(T_{21})$ and $\varphi_a^i(T_{22})$ at $T_{21}$ and $T_{22}$ time instants, and the corresponding measurement time instants $T_{21}$ and $T_{22}$; where the $T_{21}$ and $T_{22}$ time instants are time instants when the peer end transmits two consecutive repeated positioning reference signals; and

a POA variation from the $T_{21}$ time instant to the $T_{22}$ time instant: $d_{Phi2} = \varphi_a^i(T_{22}) - \varphi_a^i(T_{21})$, and a time interval dT2 from the $T_{21}$ time instant to the $T_{22}$ time instant;
a second type of positioning measurement quantity, where the second type of positioning measurement quantity includes one or a combination of the following measurement quantities:

a relative speed or a Doppler frequency offset of the peer end in relation to the local end;
a cumulative sum of oscillator frequency offsets of the peer end and the local end; and
a change rate of the cumulative sum of the oscillator frequency offsets of the peer end and the local end.

In some implementations, the second positioning measurement quantity includes one or a combination of the following two types of positioning measurement quantities.
a first type of positioning measurement quantity, where the first type of positioning measurement quantity includes one or a combination of the following measurement quantities:

phase of arrival POA values $\varphi_a^i(T_{11})$ and $\varphi_a^i(T_{12})$ at $T_{11}$ and $T_{12}$ time instants, and the corresponding measurement time instants $T_{11}$ and $T_{12}$; the $T_{11}$ and $T_{12}$ time instants are time instants when the local end transmits two consecutive repeated positioning reference signals; and

a POA variation from a $T_{11}$ time instant to a $T_{12}$ time instant: $d_{Phi1} = \varphi_a^i(T_{12}) - \varphi_a^i(T_{11})$, and a time interval dT1 from the $T_{11}$ time instant to the $T_{12}$ time instant;
a second type of positioning measurement quantity, where the second type of positioning measurement quantity includes one or a combination of the following measurement quantities:

a relative speed or a Doppler frequency offset of the local end in relation to the peer end;
a cumulative sum of oscillator frequency offsets of the local end and the peer end; and
a change rate of the cumulative sum of the oscillator frequency offsets of the local end and the peer end.

In some implementations, the positioning information includes a Doppler frequency offset determined through the following manner:

using a first ratio of a phase of arrival variation from a $T_{11}$ time instant to a $T_{12}$ time instant to a repetition time interval $T_{12} - T_{11}$ of a first positioning reference signal resource;
determining a second ratio of a phase of arrival variation from a $T_{21}$ time instant to a $T_{22}$ time instant to a repetition time interval $T_{22} - T_{21}$ of a second positioning reference signal resource; and
determining the Doppler frequency offset to be half of a difference between the first ratio and the second ratio;
where the $T_{11}$ and $T_{12}$ time instants are time instants when the local end transmits two consecutive repeated positioning reference signals;
and where the $T_{21}$ and $T_{22}$ time instants are time instants when the peer end transmits two consecutive repeated positioning reference signals.

In some implementations, the positioning information includes an oscillator frequency offset determined through the following manner:

using a first ratio of a phase of arrival variation from a $T_{11}$ time instant to a $T_{12}$ time instant to a repetition time interval $T_{12}$ - $T_{11}$ of a first positioning reference signal resource;

determining a second ratio of a phase of arrival variation from a $T_{21}$ time instant to a $T_{22}$ time instant to a repetition time interval $T_{22}$ - $T_{21}$ of a second positioning reference signal resource; and

determining the oscillator frequency offset to be half of a sum of the first ratio and the second ratio;

where the $T_{11}$ and $T_{12}$ time instants are time instants when the local end transmits two consecutive repeated positioning reference signals;

and where the $T_{21}$ and $T_{22}$ time instants are time instants when the peer end transmits two consecutive repeated positioning reference signals.

In some implementations, the positioning information further includes a change rate of the oscillator frequency offset.

In some implementations, the positioning information further includes a relative distance variation determined through the following manner:

determining a product of the Doppler frequency offset, a preset carrier wavelength, and first measurement time to be a relative distance variation of the local end in relation to the peer end; and/or,

determining a product of the Doppler frequency offset, the preset carrier wavelength, and second measurement time to be a relative distance variation of the peer end in relation to the local end;

where the first measurement time is preset positioning measurement time of the local end; and

where the second measurement time is preset positioning measurement time of the peer end.

In an implementation, the transmitting unit 11 is further configured to:

transmit the positioning information to the peer end and/or a positioning management function entity.

In an implementation, the transmitting unit 11 is further configured to:

transmit whether the local end has a positioning capability for determining the positioning information.

In an implementation, the transmitting unit 11 is further configured to:

obtain positioning assistance data, where the positioning assistance data includes resource configuration information of the first positioning reference signal.

In some implementations, the resource configuration information of the first positioning reference signal includes:

an OFDM symbol for transmitting a positioning reference signal at a $T_{11}$ time instant being adjacent to an OFDM symbol for transmitting a positioning reference signal at a $T_{12}$ time instant; or, an OFDM symbol for transmitting a positioning reference signal at a $T_{11}$ time instant and an OFDM symbol for transmitting a positioning reference signal at a $T_{12}$ time instant being two different positioning reference signal resources configured on adjacent OFDM symbols; where the $T_{11}$ time instant and the $T_{12}$ time instant are two adjacent time instants for transmitting positioning reference signals;

and/or,

during positioning measurement time, the local end being disabled of performing timing and/or frequency adjustment; or, the local end, in case of timing and/or frequency adjustment, needing to transmit, to a network side and/or the peer end, a timing and/or frequency adjustment value or indication information on whether the current timing and/or frequency adjustment is valid.

At the other end of the sidelink, with reference to FIG. 11, another positioning apparatus according to an embodiment of the present application includes:

a first transmitting unit 21, configured to transmit, to a peer end for which a sidelink with a local end has been established, a second positioning reference signal which is configured for the peer end to determine a first positioning measurement quantity by performing positioning measurement on the second positioning reference signal; and determine a second positioning measurement quantity by performing positioning measurement on a first positioning reference signal transmitted by the peer end; and

a second transmitting unit 22, configured to transmit the second positioning measurement quantity to the peer end.

In an implementation, the transmitting unit 22 is further configured to:

receive positioning information transmitted by the peer end, where the positioning information is positioning information of the peer end in relation to the local end which is determined by the peer end using the first positioning measurement quantity and the second positioning measurement quantity.

At an LMF side, with reference to FIG. 12, another positioning apparatus according to an embodiment of the present application includes:

a transmitting unit 31, configured to transmit positioning assistance data to a first end and/or a second end for which a sidelink has been established, where the positioning assistance data includes configuration information for a positioning reference signal to be transmitted through the sidelink;

a receiving unit 32, configured to receive positioning information between the first end and the second end which is transmitted by the first end and/or the second end of the sidelink.

In some implementations, the configuration information includes:

an OFDM symbol for transmitting a positioning reference signal at a $T_{11}$ time instant being adjacent to an OFDM symbol for transmitting a positioning reference signal at a $T_{12}$ time instant; or, an OFDM symbol for transmitting a positioning reference signal at a $T_{11}$ time instant and an OFDM symbol for transmitting a positioning reference signal at a $T_{12}$ time instant being two different positioning reference signal resources configured on adjacent OFDM symbols; where the $T_{11}$ time instant and the $T_{12}$ time instant are two adjacent time instants for transmitting positioning reference signals;

and/or,

during positioning measurement time, the first end and/or the second end of the sidelink being disabled of performing timing and/or frequency adjustment; or, the first end and/or the second end of the sidelink, in case of timing and/or frequency adjustment, needing to report a timing and/or frequency adjustment value or indication information on whether the current timing and/or frequency adjustment is valid.

It should be noted that, in the embodiments of the present disclosure, the partition of the units, being illustrative, is only a logical function partition, and there may be other manners for partition in an actual implementation. In addition, respective functional units in the embodiments of the present application may be integrated into a processing unit, or may exist alone physically, or two or more units may be integrated into one unit. The aforementioned integrated unit can be implemented in a form of hardware, or it can also be implemented in a form of a software function unit.

The integrated units may be stored in a computer readable storage medium if being implemented in the form of a software functional unit and sold or used as a standalone product. Based on such understanding, the technical solutions of the present application, substantively, or a part of which that makes a contribution to the prior art, or the whole or a part of which, may be embodied in the form of a software product which is stored in a storage medium, where a plurality of instructions are included to cause a computer device (which can be a personal computer, a server, a network device, etc.) or a processor (processor) to execute all or part of the steps of the described methods according to the various embodiments of the present application. The aforementioned storage medium includes: a USB flash disk, a mobile hard disk, a read-only memory (read-only memory, ROM), a random access memory (random access memory, RAM), a magnetic disk or an optical disk, or other media that can store program codes.

It should be noted that the aforementioned apparatus according to the embodiments of the present application can implement all of the method steps implemented in the foregoing method embodiments, and achieve a same technical effect. Same contents and beneficial effects of this embodiment as those of the method embodiments will not be specifically elaborated here.

An embodiment of the present application provides a processor readable storage medium, storing thereon a computer program, where the computer program is configured to enable a processor to implement any of the methods according to the foregoing embodiments of the present application.

The processor readable storage medium can be any available medium or data storage device that the processor can access, including but not limited to a magnetic memory (such as a floppy disk, a hard drive, a magnetic tape, a magneto-optical disk (MO), etc.), an optical memory (such as a CD, a DVD, a BD, a HVD, etc.), as well as a semiconductor memory (such as a ROM, an EPROM, an EEPROM, a non-volatile memory (NAND FLASH), a solid-state drive (SSD), etc.).

An embodiment of the present application further provides a computer program product or a computer program, including computer instructions, where the computer instructions are stored in a computer readable storage medium. A processor of a computer device reads the computer instructions from the computer readable storage medium, and the processor executes the computer instructions, causing the computer device to perform any of the methods described in the foregoing embodiments. The program product can adopt any combination of one or more readable media. The readable medium may be a readable signal medium or a readable storage medium. The readable storage medium may be, for example, but not limited to, an electrical, a magnetic, an optical, an electromagnetic, an infrared, or a semiconductor system, apparatus or device, or any combination thereof. More specific examples (a non-exhaustive list) of the readable storage medium include, electrical connections with one or more wires, a portable disk, a hard disk, a random access memory (RAM), a read only memory (ROM), an erasable programmable read only memory (EPROM or flash memory), an optical fiber, a portable compact disk read only memory (CD-ROM), an optical storage device, a magnetic storage device, or any suitable combination thereof.

It should be understood that:

The access technology through which entities in a communication network transmit traffic can be any suitable current or future technology, such as WLAN (wireless local area network), WiMAX (worldwide interoperability for microwave access), LTE, LTE-A, 5G, Bluetooth, infrared or the like; additionally, embodiments can also utilize wired technologies, for example, IP-based access technologies like wired networks or fixed lines.

The embodiments suitable for implementation as software code or part thereof, and executed using a processor or processing function, are independent of the specific software code and can be specified using any known or future-developed programming language, including highlevel programming languages such as objective-C, C, C++, C#, Java, Python, JavaScript, and other scripting languages, as well as low-level programming languages such as machine language or assembly code.

The implementation of the embodiments is hardware-independent and can be realized using any known or future-developed hardware technology or any combination thereof, such as a microprocessor or CPU (central processing unit), MOS (metal oxide semiconductor), CMOS (complementary MOS), BiMOS (bipolar MOS), BiCMOS (bipolar CMOS), ECL (emitter coupled logic), and/or TTL (transistor-transistor logic).

The embodiments can be implemented as a discrete device, apparatus, unit, component, or function, or implemented in a distributed manner. For example, one or more processors or processing functions may be used or shared in processing, or one or more processing segments or processing portions may be used or shared in processing, where one physical processor or more than one physical processor can be used to implement one or more processing portions dedicated to the specific processing as described.

An apparatus can be implemented with semiconductor chips, chipsets, or (hardware) modules including such chips or chipsets.

The embodiments can also be implemented as any combination of hardware and software, such as ASIC (application-specific IC (integrated circuit)) components, FPGA (field programmable gate array) or CPLD (complex programmable logic device) components, or DSP (digital signal processor) components.

The embodiments can also be implemented as a computer program product, including a computer usable media embodying computer readable program code, the computer readable program code is suitable to execute the processes as described in the embodiments, where the computer usable media can be a non-transitory medium.

Those skilled in the art should understand that the embodiments of the present application can be provided as a method, a system, or a computer program product. Therefore, the present application can adopt the form of a complete hardware embodiment, a complete software embodiment, or an embodiment combining software and hardware aspects. Moreover, the present application can adopt the form of a computer program product implemented on one or more computer-usable storage media (including but not limited to a magnetic disk storage and an optical storage) containing computer-usable program codes therein.

The present application is described with reference to flowcharts and/or block diagrams of the method, device (system) and computer program product according to the embodiments of the present application. It should be understood that each flow and/or block in the flowchart and/or block diagram, and combinations of the flows and/or blocks in the flowchart and/or block diagram can be implemented by the computer program instructions. These computer program instructions can be provided to a processor of a general-purpose computer, a special-purpose computer, an embedded processor or other programmable data processing device to produce a machine, such that the instructions executed by the processor of the computer or other programmable data processing device produce means for implementing the functions specified in one or more flows in the flowcharts and/or one or more blocks in the block diagrams.

These computer program instructions may also be stored in a computer-readable memory that can direct a computer or other programmable data processing device to function in a particular manner, such that the instructions stored in the computer-readable memory produce an article of manufacture including instruction means that implement the functions specified in one or more flows in the flowchart and/or one or more blocks in the block diagram.

These computer program instructions may also be loaded onto a computer or other programmable data processing devices, such that a series of operational steps are performed on the computer or other programmable devices to produce a computer-implemented process, such that the instructions executed on the computer or other programmable devices provide steps for implementing the functions specified in one or more flows in the flowchart and/or one or more blocks in the block diagram.

Apparently, various modifications and variations can be made to the present application by those skilled in the art without departing from the spirit and scope of the present application. Thus, if these modifications and variations of the present application are within the scope of the claims of the present application and their technical equivalents, the present application is also intended to include these modifications and variations.

**Claims**

1.  A positioning method, comprising:

    transmitting a first positioning reference signal to a peer end for which a sidelink with a local end has been established, and determining a first positioning measurement quantity by performing positioning measurement on a second positioning reference signal transmitted by the peer end; and obtaining a second positioning measurement quantity transmitted by the peer end, wherein the second positioning measurement quantity is obtained by the peer end by performing positioning measurement on the first positioning reference signal; and determining positioning information by using the first positioning measurement quantity and the second positioning measurement quantity.

2.  The method according to claim 1, wherein the first positioning reference signal is transmitted using one of the following two patterns:

    a non-staggered positioning reference signal pattern, in which transmission of a positioning reference signal is repeated with an OFDM symbol as granularity; and
    a staggered positioning reference signal pattern, in which transmission of a positioning reference signal is repeated with M OFDM symbols as granularity, wherein M represents a number of OFDM symbols occupied by a positioning reference signal resource in time domain, and M is a positive integer greater than or equal to 1 and less than 14.

3.  The method according to claim 1, wherein the first positioning measurement quantity comprises one or a combination of the following two types of positioning measurement quantities:
    a first type of positioning measurement quantity, wherein the first type of positioning measurement quantity comprises one or a combination of the following measurement quantities:

    phase of arrival POA values $\varphi_a^i(T_{21})$ and $\varphi_a^i(T_{22})$ at $T_{21}$ and $T_{22}$ time instants, and the corresponding measurement time instants $T_{21}$ and $T_{22}$; wherein the $T_{21}$ and $T_{22}$ time instants are time instants when the peer end transmits two consecutive repeated positioning reference signals; and

    a POA variation from the $T_{21}$ time instant to the $T_{22}$ time instant: $d_{Phi2} = \varphi_a^i(T_{22}) - \varphi_a^i(T_{21})$, and a time interval dT2 from the $T_{21}$ time instant to the $T_{22}$ time instant;
    a second type of positioning measurement quantity, wherein the second type of positioning measurement quantity comprises one or a combination of the following measurement quantities:

    a relative speed or a Doppler frequency offset of the peer end in relation to the local end;
    a cumulative sum of oscillator frequency offsets of the peer end and the local end; and
    a change rate of the cumulative sum of the oscillator frequency offsets of the peer end and the local end.

4.  The method according to claim 1, wherein the second positioning measurement quantity comprises one or a combination of the following two types of positioning measurement quantities:
    a first type of positioning measurement quantity, wherein the first type of positioning measurement quantity comprises one or a combination of the following measurement quantities:

    phase of arrival POA values $\varphi_a^i(T_{11})$ and $\varphi_a^i(T_{12})$ at $T_{11}$ and $T_{12}$ time instants, and the corresponding measurement time instants $T_{11}$ and $T_{12}$; the $T_{11}$ and $T_{12}$ time instants are time instants when the local end transmits two consecutive repeated positioning reference signals; and

    a POA variation from the $T_{11}$ time instant to the $T_{12}$ time instant: $d_{Phi1} = \varphi_a^i(T_{12}) - \varphi_a^i(T_{11})$, and a time interval dT1 from the $T_{11}$ time instant to the $T_{12}$ time instant;
    a second type of positioning measurement quantity, wherein the second type of positioning measurement quantity comprises one or a combination of the following measurement quantities:

    a relative speed or a Doppler frequency offset of the local end in relation to the peer end;

a cumulative sum of oscillator frequency offsets of the local end and the peer end; and

a change rate of the cumulative sum of the oscillator frequency offsets of the local end and the peer end.

5. The method according to claim 1, wherein the positioning information comprises a Doppler frequency offset determined through the following manner:

using a first ratio of a phase of arrival variation from a $T_{11}$ time instant to a $T_{12}$ time instant to a repetition time interval $T_{12} - T_{11}$ of a first positioning reference signal resource;

determining a second ratio of a phase of arrival variation from a $T_{21}$ time instant to a $T_{22}$ time instant to a repetition time interval $T_{22} - T_{21}$ of a second positioning reference signal resource; and

determining the Doppler frequency offset to be half of a difference between the first ratio and the second ratio;

wherein the $T_{11}$ and $T_{12}$ time instants are time instants when the local end transmits two consecutive repeated positioning reference signals;

and wherein the $T_{21}$ and $T_{22}$ time instants are time instants when the peer end transmits two consecutive repeated positioning reference signals.

6. The method according to claim 1, wherein the positioning information comprises an oscillator frequency offset determined through the following manner:

using a first ratio of a phase of arrival variation from a $T_{11}$ time instant to a $T_{12}$ time instant to a repetition time interval $T_{12} - T_{11}$ of a first positioning reference signal resource;

determining a second ratio of a phase of arrival variation from a $T_{21}$ time instant to a $T_{22}$ time instant to a repetition time interval $T_{22} - T_{21}$ of a second positioning reference signal resource; and

determining the oscillator frequency offset to be half of a sum of the first ratio and the second ratio;

wherein the $T_{11}$ and $T_{12}$ time instants are time instants when the local end transmits two consecutive repeated positioning reference signals;

and wherein the $T_{21}$ and $T_{22}$ time instants are time instants when the peer end transmits two consecutive repeated positioning reference signals.

7. The method according to claim 6, wherein the positioning information further comprises a change rate of the oscillator frequency offset.

8. The method according to claim 5, wherein the positioning information further comprises a relative distance variation determined through the following manner:

determining a product of the Doppler frequency offset, a preset carrier wavelength, and first measurement time to be a relative distance variation of the local end in relation to the peer end; and/or,

determining a product of the Doppler frequency offset, the preset carrier wavelength, and second measurement time to be a relative distance variation of the peer end in relation to the local end;

wherein the first measurement time is preset positioning measurement time of the local end; and

wherein the second measurement time is preset positioning measurement time of the peer end.

9. The method according to claim 1, further comprising:
transmitting the positioning information to the peer end and/or a positioning management function entity.

10. The method according to claim 1, further comprising:
transmitting whether the local end has a positioning capability for determining the positioning information.

11. The method according to claim 1, further comprising:
obtaining positioning assistance data, wherein the positioning assistance data comprises resource configuration information of the first positioning reference signal.

12. The method according to claim 11, wherein the resource configuration information of the first positioning reference signal comprises:

an OFDM symbol for transmitting a positioning reference signal at a $T_{11}$ time instant being adjacent to an OFDM symbol for transmitting a positioning reference signal at a $T_{12}$ time instant; or, an OFDM symbol for transmitting a positioning reference signal at a $T_{11}$ time instant and an OFDM symbol for transmitting a positioning reference

signal at a $T_{12}$ time instant being two different positioning reference signal resources configured on adjacent OFDM symbols; wherein the $T_{11}$ time instant and the $T_{12}$ time instant are two adjacent time instants for transmitting positioning reference signals;

and/or,

during positioning measurement time, the local end being disabled of performing timing and/or frequency adjustment; or, the local end, in case of timing and/or frequency adjustment in real time, needing to transmit, to a network side and/or the peer end, a timing and/or frequency adjustment value or indication information on whether the current timing and/or frequency adjustment is valid.

**13.** A positioning method, comprising:

transmitting, to a peer end for which a sidelink with a local end has been established, a second positioning reference signal which is configured for the peer end to determine a first positioning measurement quantity by performing positioning measurement on the second positioning reference signal; and determining a second positioning measurement quantity by performing positioning measurement on a first positioning reference signal transmitted by the peer end; and

transmitting the second positioning measurement quantity to the peer end.

**14.** The method according to claim 13, further comprising:

receiving positioning information transmitted by the peer end, wherein the positioning information is positioning information of the peer end in relation to the local end which is determined by the peer end using the first positioning measurement quantity and the second positioning measurement quantity.

**15.** A positioning method, comprising:

transmitting positioning assistance data to a first end and/or a second end for which a sidelink has been established, wherein the positioning assistance data comprises configuration information for a positioning reference signal to be transmitted through the sidelink;

receiving positioning information between the first end and the second end which is transmitted by the first end and/or the second end of the sidelink.

**16.** The method according to claim 15, wherein the configuration information comprises:

an OFDM symbol for transmitting a positioning reference signal at a $T_{11}$ time instant being adjacent to an OFDM symbol for transmitting a positioning reference signal at a $T_{12}$ time instant; or, an OFDM symbol for transmitting a positioning reference signal at a $T_{11}$ time instant and an OFDM symbol for transmitting a positioning reference signal at a $T_{12}$ time instant being two different positioning reference signal resources configured on adjacent OFDM symbols; wherein the $T_{11}$ time instant and the $T_{12}$ time instant are two adjacent time instants for transmitting positioning reference signals;

and/or,

during positioning measurement time, the first end and/or the second end of the sidelink being disabled of performing timing and/or frequency adjustment; or, the first end and/or the second end of the sidelink, in case of timing and/or frequency adjustment, needing to report a timing and/or frequency adjustment value or indication information on whether the current timing and/or frequency adjustment is valid.

**17.** A positioning apparatus, comprising a memory, a transceiver and a processor;

wherein the memory is configured to store a computer program; the transceiver is configured to receive or transmit data under control of the processor; the processor is configured to read the computer program in the memory and perform the following operations:

transmitting a first positioning reference signal to a peer end for which a sidelink with a local end has been established, and determining a first positioning measurement quantity by performing positioning measurement on a second positioning reference signal transmitted by the peer end; and obtaining a second positioning measurement quantity transmitted by the peer end, wherein the second positioning measurement quantity is obtained by the peer end by performing positioning measurement on the first positioning reference signal; and determining positioning information by using the first positioning measurement quantity and the second positioning measurement quantity.

18. The apparatus according to claim 17, wherein the first positioning reference signal is transmitted using one of the following two patterns:

a non-staggered positioning reference signal pattern, in which transmission of a positioning reference signal is repeated with an OFDM symbol as granularity; and
a staggered positioning reference signal pattern, in which transmission of a positioning reference signal is repeated with M OFDM symbols as granularity, wherein M represents a number of OFDM symbols occupied by a positioning reference signal resource in time domain, and M is a positive integer greater than or equal to 1 and less than 14.

19. The apparatus according to claim 17, wherein the first positioning measurement quantity comprises one or a combination of the following two types of positioning measurement quantities:
a first type of positioning measurement quantity, wherein the first type of positioning measurement quantity comprises one or a combination of the following measurement quantities:

phase of arrival POA values $\varphi_a^i(T_{21})$ and $\varphi_a^i(T_{22})$ at $T_{21}$ and $T_{22}$ time instants, and the corresponding measurement time instants $T_{21}$ and $T_{22}$; wherein the $T_{21}$ and the $T_{22}$ time instants are time instants when the peer end transmits two consecutive repeated positioning reference signals; and

a POA variation from the $T_{21}$ time instant to the $T_{22}$ time instant: $d_{Phi2} = \varphi_a^i(T_{22}) - \varphi_a^i(T_{21})$, and a time interval dT2 from the $T_{21}$ time instant to the $T_{22}$ time instant;
a second type of positioning measurement quantity, wherein the second type of positioning measurement quantity comprises one or a combination of the following measurement quantities:

a relative speed or a Doppler frequency offset of the peer end in relation to the local end;
a cumulative sum of oscillator frequency offsets of the peer end and the local end; and
a change rate of the cumulative sum of the oscillator frequency offsets of the peer end and the local end.

20. The apparatus according to claim 17, wherein the second positioning measurement quantity comprises one or a combination of the following two types of positioning measurement quantities:
a first type of positioning measurement quantity, wherein the first type of positioning measurement quantity comprises one or a combination of the following measurement quantities:

phase of arrival POA values $\varphi_a^i(T_{11})$ and $\varphi_a^i(T_{12})$ at $T_{11}$ and $T_{12}$ time instants, and the corresponding measurement time instants $T_{11}$ and $T_{12}$; the $T_{11}$ and $T_{12}$ time instants are time instants when the local end transmits two consecutive repeated positioning reference signals; and

a POA variation from a $T_{11}$ time instant to a $T_{12}$ time instant: $d_{Phi1} = \varphi_a^i(T_{12}) - \varphi_a^i(T_{11})$, and a time interval dT1 from the $T_{11}$ time instant to the $T_{12}$ time instant;
a second type of positioning measurement quantity, wherein the second type of positioning measurement quantity comprises one or a combination of the following measurement quantities:

a relative speed or a Doppler frequency offset of the local end in relation to the peer end;
a cumulative sum of oscillator frequency offsets of the local end and the peer end; and
a change rate of the cumulative sum of the oscillator frequency offsets of the local end and the peer end.

21. The apparatus according to claim 17, wherein the positioning information comprises a Doppler frequency offset determined through the following manner:

using a first ratio of a phase of arrival variation from a $T_{11}$ time instant to a $T_{12}$ time instant to a repetition time interval $T_{12} - T_{11}$ of a first positioning reference signal resource;
determining a second ratio of a phase of arrival variation from a $T_{21}$ time instant to a $T_{22}$ time instant to a repetition time interval $T_{22} - T_{21}$ of a second positioning reference signal resource; and
determining the Doppler frequency offset to be half of a difference between the first ratio and the second ratio;
wherein the $T_{11}$ and $T_{12}$ time instants are time instants when the local end transmits two consecutive repeated positioning reference signals;
and wherein the $T_{21}$ and $T_{22}$ time instants are time instants when the peer end transmits two consecutive repeated positioning reference signals.

22. The apparatus according to claim 17, wherein the positioning information comprises an oscillator frequency offset determined through the following manner:

using a first ratio of a phase of arrival variation from a $T_{11}$ time instant to a $T_{12}$ time instant to a repetition time interval $T_{12} - T_{11}$ of a first positioning reference signal resource;
determining a second ratio of a phase of arrival variation from a $T_{21}$ time instant to a $T_{22}$ time instant to a repetition time interval $T_{22} - T_{21}$ of a second positioning reference signal resource; and
determining the oscillator frequency offset to be half of a sum of the first ratio and the second ratio;
wherein the $T_{11}$ and $T_{12}$ time instants are time instants when the local end transmits two consecutive repeated positioning reference signals;
and wherein the $T_{21}$ and $T_{22}$ time instants are time instants when the peer end transmits two consecutive repeated positioning reference signals.

23. The apparatus according to claim 22, wherein the positioning information further comprises a change rate of the oscillator frequency offset.

24. The apparatus according to claim 21, wherein the positioning information further comprises a relative distance variation determined through the following manner:

determining a product of the Doppler frequency offset, a preset carrier wavelength, and first measurement time to be a relative distance variation of the local end in relation to the peer end; and/or,
determining a product of the Doppler frequency offset, the preset carrier wavelength, and second measurement time to be a relative distance variation of the peer end in relation to the local end;
wherein the first measurement time is preset positioning measurement time of the local end; and
wherein the second measurement time is preset positioning measurement time of the peer end.

25. The apparatus according to claim 17, wherein the processor is further configured to read the computer program in the memory and perform the following operation:
transmitting the positioning information to the peer end and/or a positioning management function entity.

26. The apparatus according to claim 17, wherein the processor is further configured to read the computer program in the memory and perform the following operation:
transmitting whether the local end has a positioning capability for determining the positioning information.

27. The apparatus according to claim 17, wherein the processor is further configured to read the computer program in the memory and perform the following operation:
obtaining positioning assistance data, wherein the positioning assistance data comprises resource configuration information of the first positioning reference signal.

28. The apparatus according to claim 27, wherein the resource configuration information of the first positioning reference signal comprises:

an OFDM symbol for transmitting a positioning reference signal at a $T_{11}$ time instant being adjacent to an OFDM symbol for transmitting a positioning reference signal at a $T_{12}$ time instant; or, an OFDM symbol for transmitting a positioning reference signal at a $T_{11}$ time instant and an OFDM symbol for transmitting a positioning reference signal at a $T_{12}$ time instant being two different positioning reference signal resources configured on adjacent OFDM symbols; wherein the $T_{11}$ time instant and the $T_{12}$ time instant are two adjacent time instants for transmitting positioning reference signals;
and/or,
during positioning measurement time, the local end being disabled of performing timing and/or frequency adjustment; or, the local end, in case of timing and/or frequency adjustment, needing to transmit, to a network side and/or the peer end, a timing and/or frequency adjustment value or indication information on whether the current timing and/or frequency adjustment is valid.

29. A positioning apparatus, comprising a memory, a transceiver and a processor;
wherein the memory is configured to store a computer program; the transceiver is configured to receive or transmit data under control of the processor; the processor is configured to read the computer program in the memory and perform the following operations:

transmitting, to a peer end for which a sidelink with a local end has been established, a second positioning reference signal which is configured for the peer end to determine a first positioning measurement quantity by performing positioning measurement on the second positioning reference signal; and determining a second positioning measurement quantity by performing positioning measurement on a first positioning reference signal transmitted by the peer end; and
transmitting the second positioning measurement quantity to the peer end.

30. The apparatus according to claim 29, wherein the processor is further configured to read the computer program in the memory and perform the following operation:
receiving positioning information transmitted by the peer end, wherein the positioning information is positioning information of the peer end in relation to the local end which is determined by the peer end using the first positioning measurement quantity and the second positioning measurement quantity.

31. A positioning apparatus, comprising a memory, a transceiver and a processor;
wherein the memory is configured to store a computer program; the transceiver is configured to receive or transmit data under control of the processor; the processor is configured to read the computer program in the memory and perform the following operations:

transmitting positioning assistance data to a first end and/or a second end for which a sidelink has been established, wherein the positioning assistance data comprises configuration information for a positioning reference signal to be transmitted through the sidelink;
receiving relative positioning information between the first end and the second end which is transmitted by the first end and/or the second end of the sidelink.

32. The apparatus according to claim 31, wherein the configuration information comprises:

an OFDM symbol for transmitting a positioning reference signal at a $T_{11}$ time instant being adjacent to an OFDM symbol for transmitting a positioning reference signal at a $T_{12}$ time instant; or, an OFDM symbol for transmitting a positioning reference signal at a $T_{11}$ time instant and an OFDM symbol for transmitting a positioning reference signal at a $T_{12}$ time instant being two different positioning reference signal resources configured on adjacent OFDM symbols; wherein the $T_{11}$ time instant and the $T_{12}$ time instant are two adjacent time instants for transmitting positioning reference signals;
and/or,
during positioning measurement time, the first end and/or the second end of the sidelink being disabled of performing timing and/or frequency adjustment; or, the first end and/or the second end of the sidelink, in case of timing and/or frequency adjustment, needing to report a timing and/or frequency adjustment value or indication information on whether the current timing and/or frequency adjustment is valid.

33. A positioning apparatus, comprising:

a transmitting unit, configured to transmit a first positioning reference signal to a peer end for which a sidelink with a local end has been established, and determine a first positioning measurement quantity by performing positioning measurement on a second positioning reference signal transmitted by the peer end; and obtain a second positioning measurement quantity transmitted by the peer end, wherein the second positioning measurement quantity is obtained by the peer end by performing positioning measurement on the first positioning reference signal; and
a determining unit, configured to determine positioning information by using the first positioning measurement quantity and the second positioning measurement quantity.

34. The apparatus according to claim 33, wherein the first positioning reference signal is transmitted using one of the following two patterns:

a non-staggered positioning reference signal pattern, in which transmission of a positioning reference signal is repeated with an OFDM symbol as granularity; and

a staggered positioning reference signal pattern, in which transmission of a positioning reference signal is repeated with M OFDM symbols as granularity, wherein M represents a number of OFDM symbols occupied by a positioning reference signal resource in time domain, and M is a positive integer greater than or equal to 1 and less than 14.

35. The apparatus according to claim 33, wherein the first positioning measurement quantity comprises one or a combination of the following two types of positioning measurement quantities:

a first type of positioning measurement quantity, wherein the first type of positioning measurement quantity comprises one or a combination of the following measurement quantities:

phase of arrival POA values $\varphi_a^i(T_{21})$ and $\varphi_a^i(T_{22})$ at $T_{21}$ and $T_{22}$ time instants, and the corresponding measurement time instants $T_{21}$ and $T_{22}$; wherein the $T_{21}$ and $T_{22}$ time instants are time instants when the peer end transmits two consecutive repeated positioning reference signals; and

a POA variation from the $T_{21}$ time instant to the $T_{22}$ time instant: $d_{Phi2} = \varphi_a^i(T_{22}) - \varphi_a^i(T_{21})$, and a time interval dT2 from the $T_{21}$ time instant to the $T_{22}$ time instant;

a second type of positioning measurement quantity, wherein the second type of positioning measurement quantity comprises one or a combination of the following measurement quantities:

a relative speed or a Doppler frequency offset of the peer end in relation to the local end;
a cumulative sum of oscillator frequency offsets of the peer end and the local end; and
a change rate of the cumulative sum of the oscillator frequency offsets of the peer end and the local end.

36. The apparatus according to claim 33, wherein the second positioning measurement quantity comprises one or a combination of the following two types of positioning measurement quantities:

a first type of positioning measurement quantity, wherein the first type of positioning measurement quantity comprises one or a combination of the following measurement quantities:

phase of arrival POA values $\varphi_a^i(T_{11})$ and $\varphi_a^i(T_{12})$ at $T_{11}$ and $T_{12}$ time instants, and the corresponding measurement time instants $T_{11}$ and $T_{12}$; the $T_{11}$ and $T_{12}$ time instants are time instants when the local end transmits two consecutive repeated positioning reference signals; and

a POA variation from a $T_{11}$ time instant to a $T_{12}$ time instant: $d_{Phi1} = \varphi_a^i(T_{12}) - \varphi_a^i(T_{11})$, and a time interval dT1 from the $T_{11}$ time instant to the $T_{12}$ time instant;

a second type of positioning measurement quantity, wherein the second type of positioning measurement quantity comprises one or a combination of the following measurement quantities:

a relative speed or a Doppler frequency offset of the local end in relation to the peer end;
a cumulative sum of oscillator frequency offsets of the local end and the peer end; and
a change rate of the cumulative sum of the oscillator frequency offsets of the local end and the peer end.

37. The apparatus according to claim 33, wherein the positioning information comprises a Doppler frequency offset determined through the following manner:

using a first ratio of a phase of arrival variation from a $T_{11}$ time instant to a $T_{12}$ time instant to a repetition time interval $T_{12}$ - $T_{11}$ of a first positioning reference signal resource;
determining a second ratio of a phase of arrival variation from a $T_{21}$ time instant to a $T_{22}$ time instant to a repetition time interval $T_{22}$ - $T_{21}$ of a second positioning reference signal resource; and
determining the Doppler frequency offset to be half of a difference between the first ratio and the second ratio;
wherein the $T_{11}$ and $T_{12}$ time instants are time instants when the local end transmits two consecutive repeated positioning reference signals;
and wherein the $T_{21}$ and $T_{22}$ time instants are time instants when the peer end transmits two consecutive repeated positioning reference signals.

**38.** The apparatus according to claim 33, wherein the positioning information comprises an oscillator frequency offset determined through the following manner:

using a first ratio of a phase of arrival variation from a $T_{11}$ time instant to a $T_{12}$ time instant to a repetition time interval $T_{12}$ - $T_{11}$ of a first positioning reference signal resource;
determining a second ratio of a phase of arrival variation from a $T_{21}$ time instant to a $T_{22}$ time instant to a repetition time interval $T_{22}$ - $T_{21}$ of a second positioning reference signal resource; and
determining the oscillator frequency offset to be half of a sum of the first ratio and the second ratio;
wherein the $T_{11}$ and $T_{12}$ time instants are time instants when the local end transmits two consecutive repeated positioning reference signals;
and wherein the $T_{21}$ and $T_{22}$ time instants are time instants when the peer end transmits two consecutive repeated positioning reference signals.

**39.** The apparatus according to claim 38, wherein the positioning information further comprises a change rate of the oscillator frequency offset.

**40.** The apparatus according to claim 37, wherein the positioning information further comprises a relative distance variation determined through the following manner:

determining a product of the Doppler frequency offset, a preset carrier wavelength, and first measurement time to be a relative distance variation of the local end in relation to the peer end; and/or,
determining a product of the Doppler frequency offset, the preset carrier wavelength, and second measurement time to be a relative distance variation of the peer end in relation to the local end;
wherein the first measurement time is preset positioning measurement time of the local end; and
wherein the second measurement time is preset positioning measurement time of the peer end.

**41.** The apparatus according to claim 33, wherein the transmitting unit is further configured to:
transmit the positioning information to the peer end and/or a positioning management function entity.

**42.** The apparatus according to claim 33, wherein the transmitting unit is further configured to:
transmit whether the local end has a positioning capability for determining the positioning information.

**43.** The apparatus according to claim 33, wherein the transmitting unit is further configured to:
obtain positioning assistance data, wherein the positioning assistance data comprises resource configuration information of the first positioning reference signal.

**44.** The apparatus according to claim 43, wherein the resource configuration information of the first positioning reference signal comprises:

an OFDM symbol for transmitting a positioning reference signal at a $T_{11}$ time instant being adjacent to an OFDM symbol for transmitting a positioning reference signal at a $T_{12}$ time instant; or, an OFDM symbol for transmitting a positioning reference signal at a $T_{11}$ time instant and an OFDM symbol for transmitting a positioning reference signal at a $T_{12}$ time instant being two different positioning reference signal resources configured on adjacent OFDM symbols; wherein the $T_{11}$ time instant and the $T_{12}$ time instant are two adjacent time instants for transmitting positioning reference signals;
and/or,
during positioning measurement time, the local end being disabled of performing timing and/or frequency adjustment; or, the local end, in case of timing and/or frequency adjustment, needing to transmit, to a network side and/or the peer end, a timing and/or frequency adjustment value or indication information on whether the current timing and/or frequency adjustment is valid.

**45.** A positioning apparatus, comprising:

a first transmitting unit, configured to transmit, to a peer end for which a sidelink with a local end has been established, a second positioning reference signal which is configured for the peer end to determine a first positioning measurement quantity by performing positioning measurement on the second positioning reference signal; and determine a second positioning measurement quantity by performing positioning measurement on a first positioning reference signal transmitted by the peer end; and

a second transmitting unit, configured to transmit the second positioning measurement quantity to the peer end.

46. The apparatus according to claim 45, wherein the second transmitting unit is further configured to:
receive positioning information transmitted by the peer end, wherein the positioning information is positioning information of the peer end in relation to the local end which is determined by the peer end using the first positioning measurement quantity and the second positioning measurement quantity.

47. A positioning apparatus, comprising:

a transmitting unit, configured to transmit positioning assistance data to a first end and/or a second end for which a sidelink has been established, wherein the positioning assistance data comprises configuration information for a positioning reference signal to be transmitted through the sidelink;
a receiving unit, configured to receive positioning information between the first end and the second end which is transmitted by the first end and/or the second end of the sidelink.

48. The apparatus according to claim 47, wherein the configuration information comprises:

an OFDM symbol for transmitting a positioning reference signal at a $T_{11}$ time instant being adjacent to an OFDM symbol for transmitting a positioning reference signal at a $T_{12}$ time instant; or, an OFDM symbol for transmitting a positioning reference signal at a $T_{11}$ time instant and an OFDM symbol for transmitting a positioning reference signal at a $T_{12}$ time instant being two different positioning reference signal resources configured on adjacent OFDM symbols; wherein the $T_{11}$ time instant and the $T_{12}$ time instant are two adjacent time instants for transmitting positioning reference signals;
and/or,
during positioning measurement time, the first end and/or the second end of the sidelink being disabled of performing timing and/or frequency adjustment; or, the first end and/or the second end of the sidelink, in case of timing and/or frequency adjustment, needing to report a timing and/or frequency adjustment value or indication information on whether the current timing and/or frequency adjustment is valid.

49. A processor readable storage medium, storing thereon a computer program, wherein the computer program is configured to enable a processor to implement the method according to any one of claims 1 to 16.

SL-PRS1

First end | Second end

SL-PRS2

FIG. 1

Measurement time D1

Measurement time D2

dT1

dT2

dT1

dT2

...

...

...

...

Repeated SL-PRS1 resource

Repeated SL-PRS2 resource

Repeated SL-PRS1 resource

Repeated SL-PRS2 resource

T11  T12  T1N

T21  T22  T2N

Time

FIG. 2

| Target UE | Anchor UE | Base station/TRP | LMF entity |
|---|---|---|---|

301, terminals are in an RRC connected state

302, requesting a positioning capability (Doppler frequency offset estimation)

303, reporting a positioning capability (Doppler frequency offset estimation)

304, an indication for requesting positioning assistance data (proposed SL-PRS resource configuration)

305A, negotiating the positioning assistance data

305B, determining the positioning assistance data

305C, providing the positioning assistance data

306A, transmitting SL-PRS1

306B, transmitting SL-PRS2

307A, receiving and measuring SL-PRS2 to obtain a first positioning measurement quantity

307B, receiving and measuring SL-PRS1 to obtain a second positioning measurement quantity

308, reporting the second positioning measurement quantity

309, calculating a Doppler frequency offset and/or an oscillator frequency offset by using the obtained first positioning measurement quantity and second positioning measurement quantity

310, reporting positioning information (a Doppler frequency offset and/or an oscillator frequency offset, or a relative distance variation)

FIG. 3

| Target UE | TRP/RSU | Base station | LMF entity |

401, a terminal is in an RRC connected state

402, requesting a positioning capability (Doppler frequency offset estimation)

403, reporting a positioning capability (Doppler frequency offset estimation)

404, an indication for requesting positioning assistance data (proposed SL-PRS resource configuration)

405A, negotiating the positioning assistance data

405B, determining the positioning assistance data

405B, determining the positioning assistance data

405C, providing the positioning assistance data

406A, transmitting SL-PRS1

406B, transmitting SL-PRS2

407A, receiving and measuring SL-PRS2 to obtain a first positioning measurement quantity

407B, receiving and measuring SL-PRS1 to obtain a second positioning measurement quantity

408, reporting the second positioning measurement quantity

409, calculating a Doppler frequency offset and/or an oscillator frequency offset by using the obtained first positioning measurement quantity and second positioning measurement quantity

410, reporting positioning information (a Doppler frequency offset and/or an oscillator frequency offset, or a relative distance variation)

FIG. 4

Transmitting a first positioning reference signal to a peer end for which a sidelink with a local end has been established, and determining a first positioning measurement quantity by performing positioning measurement on a second positioning reference signal transmitted by the peer end; and obtaining a second positioning measurement quantity transmitted by the peer end, where the second positioning measurement quantity is obtained by the peer end by performing positioning measurement on the first positioning reference signal

S501

Determining positioning information of the local end in relation to the peer end by using the first positioning measurement quantity and the second positioning measurement quantity

S502

FIG. 5

Transmitting, to a peer end for which a sidelink with a local end has been established, a second positioning reference signal which is configured for the peer end to determine a first positioning measurement quantity by performing positioning measurement on the second positioning reference signal; and determining a second positioning measurement quantity by performing positioning measurement on a first positioning reference signal transmitted by the peer end

S601

Transmitting the second positioning measurement quantity to the peer end

S602

FIG. 6

Transmitting positioning assistance data to a first end and/or a second end for which a sidelink has been established, where the positioning assistance data includes configuration information for a positioning reference signal to be transmitted through the sidelink

S701

Receiving positioning information between the first end and the second end which is transmitted by the first end and/or the second end of the sidelink

S702

FIG. 7

600 Processor

610 Transceiver

Bus interface

620 Memory

630 User interface

FIG. 8

500 Processor

510 Transceiver

Bus interface

520 Memory

FIG. 9

Transmitting unit ⟿ 11

Determining unit ⟿ 12

FIG. 10

First transmitting unit ⟿ 21

Second transmitting unit ⟿ 22

FIG. 11

Transmitting unit ⟿ 31

Receiving unit ⟿ 32

FIG. 12

## INTERNATIONAL SEARCH REPORT

| International application No. |
| --- |
| **PCT/CN2023/115862** |

| A. | CLASSIFICATION OF SUBJECT MATTER |
| --- | --- |

H04W76/14(2018.01)i; H04L67/52(2022.01)i; H04W4/02(2018.01)i

According to International Patent Classification (IPC) or to both national classification and IPC

| B. | FIELDS SEARCHED |
| --- | --- |

Minimum documentation searched (classification system followed by classification symbols)

IPC:H04W,H04L

Documentation searched other than minimum documentation to the extent that such documents are included in the fields searched

Electronic data base consulted during the international search (name of data base and, where practicable, search terms used)

3GPP, CNTXT, ENTXT, DWPI: 参考信号, 侧链路, 定位, 副链路, 锚, 节点, 直连链路, 直通链路, anchor, node, position, PRS, sidelink, SL, target, UE, assist+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | US 2022201774 A1 (QUALCOMM INC.) 23 June 2022 (2022-06-23) description, paragraphs 58, 74, 100, and 107-115, and figure 7 | 1-49 |
| A | WO 2022125393 A1 (QUALCOMM INC.) 16 June 2022 (2022-06-16) entire document | 1-49 |
| A | WO 2021226616 A1 (QUALCOMM INC.) 11 November 2021 (2021-11-11) entire document | 1-49 |
| A | CN 114375600 A (IDAC HOLDINGS, INC.) 19 April 2022 (2022-04-19) entire document | 1-49 |
| A | WO 2021240478 A1 (LENOVO (SINGAPORE) PTE. LTD.) 02 December 2021 (2021-12-02) entire document | 1-49 |
| A | LENOVO. "On Potential SL Positioning Solutions" *3GPP TSG RAN WG1#109-e, R1-2204559*, 20 May 2022 (2022-05-20), entire document | 1-49 |

| ☐ Further documents are listed in the continuation of Box C. | ☑ See patent family annex. |
| --- | --- |

|  |  |  |  |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **06 November 2023** | **13 November 2023** |

| Name and mailing address of the ISA/CN | Authorized officer |
| --- | --- |
| **China National Intellectual Property Administration (ISA/CN) China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/115862**

| Patent document cited in search report | | | Publication date (day/month/year) | Patent family member(s) | | | Publication date (day/month/year) |
|---|---|---|---|---|---|---|---|
| US | 2022201774 | A1 | 23 June 2022 | WO | 2022132307 | A1 | 23 June 2022 |
| | | | | KR | 20230121051 | A | 17 August 2023 |
| | | | | TW | 202226850 | A | 01 July 2022 |
| WO | 2022125393 | A1 | 16 June 2022 | EP | 4260620 | A1 | 18 October 2023 |
| | | | | TW | 202231082 | A | 01 August 2022 |
| | | | | KR | 20230118829 | A | 14 August 2023 |
| | | | | CN | 116848938 | A | 03 October 2023 |
| WO | 2021226616 | A1 | 11 November 2021 | EP | 4147469 | A1 | 15 March 2023 |
| | | | | TW | 202201986 | A | 01 January 2022 |
| | | | | JP | 2023524085 | A | 08 June 2023 |
| | | | | KR | 20230005846 | A | 10 January 2023 |
| | | | | BR | 112022021607 | A2 | 06 December 2022 |
| | | | | US | 2023199699 | A1 | 22 June 2023 |
| | | | | CN | 115516889 | A | 23 December 2022 |
| CN | 114375600 | A | 19 April 2022 | WO | 2021030583 | A1 | 18 February 2021 |
| | | | | JP | 2022545389 | A | 27 October 2022 |
| | | | | US | 2022295442 | A1 | 15 September 2022 |
| | | | | EP | 4014524 | A1 | 22 June 2022 |
| | | | | BR | 112022002877 | A2 | 17 May 2022 |
| WO | 2021240478 | A1 | 02 December 2021 | EP | 4158829 | A1 | 05 April 2023 |
| | | | | BR | 112022024306 | A2 | 27 December 2022 |
| | | | | WO | 2021240479 | A1 | 02 December 2021 |
| | | | | EP | 4158828 | A1 | 05 April 2023 |
| | | | | KR | 20230019102 | A | 07 February 2023 |
| | | | | US | 2023224121 | A1 | 13 July 2023 |
| | | | | US | 2023199802 | A1 | 22 June 2023 |
| | | | | CN | 115699663 | A | 03 February 2023 |
| | | | | CN | 115699662 | A | 03 February 2023 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211218277